(19) Europäisches Patentamt
European Patent Office
Office européen des brevets

(11) EP 2 181 751 B1

(12) EUROPEAN PATENT SPECIFICATION

(45) Date of publication and mention
of the grant of the patent:
**26.02.2014  Bulletin 2014/09**

(51) Int Cl.:
*B01D 53/02* [(2006.01)]     *B01J 20/04* [(2006.01)]
*B01J 20/06* [(2006.01)]     *B01J 20/08* [(2006.01)]
*B01J 20/28* [(2006.01)]     *B01J 20/32* [(2006.01)]
*B01J 20/34* [(2006.01)]

(21) Application number: **09174759.2**

(22) Date of filing: **02.11.2009**

(54) **A sorbent composition, the preparation method thereof, and the process for removing sulfur oxides and nitrogen oxides in a flue gas by the sorbent composition**

Sorptionsmittelzusammensetzung, entsprechendes Herstellungsverfahren und Verfahren zum Entfernen von Schwefeloxiden und Stickoxiden in einem Abgas durch die Sorptionsmittelzusammensetzung

Composition sorbante, son procédé de préparation et procédé pour l'élimination d'oxydes de soufre et d'oxyde d'azote dans un gaz combustible par la composition sorbante

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.10.2008  CN 200810225612**
**31.10.2008  CN 200810225611**
**20.11.2008  CN 200810226916**
**25.12.2008  CN 200810246520**
**12.02.2009  CN 200910077703**
**12.02.2009  CN 200910077702**
**12.03.2009  CN 200910119516**
**12.03.2009  CN 200910119514**
**12.03.2009  CN 200910119515**

(43) Date of publication of application:
**05.05.2010  Bulletin 2010/18**

(73) Proprietors:
• **China Petroleum & Chemical Corporation**
**Beijing 100728 (CN)**
• **Research Institute Of Petroleum Processing, Sinopec**
**Beijing 100083 (CN)**

(72) Inventors:
• **Du, Bing**
**100083, Beijing (CN)**
• **Zong, Baoning**
**100083, Beijing (CN)**
• **Luo, Yibin**
**100083, Beijing (CN)**
• **Wang, Weijia**
**100083, Beijing (CN)**

(74) Representative: **HOFFMANN EITLE**
**Patent- und Rechtsanwälte**
**Arabellastrasse 4**
**81925 München (DE)**

(56) References cited:
**WO-A1-01/32304       US-A1- 2003 111 389**
**US-A1- 2007 015 658**

• **PALOMARES A E ET AL: "Reactivity in the removal of SO2 and NOx on Co/Mg/Al mixed oxides derived from hydrotalcites" APPLIED CATALYSIS B: ENVIRONMENTAL, ELSEVIER, vol. 20, no. 4, 5 April 1999 (1999-04-05), pages 257-266, XP002554241 ISSN: 0926-3373**
• **CHUNSHAN SONG: "An overview of new approaches to deep desulfurization for ultra-clean gasoline, diesel fuel and jet fuel", CATALYSIS TODAY, vol. 86, no. 1-4, 1 November 2003 (2003-11-01), pages 211-263, XP055079091, ISSN: 0920-5861, DOI: 10.1016/S0920-5861(03) 00412-7**

**Description**

Technical Field

The present invention relates to a sorbent composition, the preparation method thereof, and the process for removing sulfur oxides and nitrogen oxides in a flue gas by the sorbent composition.

Background Art

The pollution problem of the sulfur oxides SOx (more than 95% being $SO_2$), nitrogen oxides NOx (more than 90% being NO) in the atmosphere is increasingly serious. The flue gases produced from the combustion of fuels, smeltering of metals, or the like are main sources of the SOx and NOx. These harmful gases are greatly advserse to the entironment and human health.

Although the technologies for the SOx emission control have been relatively well established, the results of the NOx emission control researches conduced at home and abroad are unsatisfactory.

US6521559 discloses a pillar clay catalyst which is useful in the selective catalysis reduction process (SCR) wherein NO is reduced by means of $NH_3$. The features of the catalyst mainly consist in introducing metal oxides, e.g. $V_2O_5$, CuO, $Fe_2O_3$, $Cr_2O_3$, $Fe_2O_3$-$Cr_2O_3$, $Nb_2O_5$, or the like, into the intermediate portion of the clay layer. NO is catalystically reduced by means of the catalytic reduction property of the metal oxides. The NOx removal rate of the catalyst is above 95%.

US5451387 reports a Fe-ZSM-5 catalyst useful in SCR process. The NOx removal rate of the catalyst can be up to 98%.

US6165934 report a material which can adsorb and remove NOx from the flue gas. The carrier of the material is $TiO_2$, $SiO_2$, $Al_2O_3$, or the like, and the active component comprises alkaline metals, copper, noble metals, or the like. The NOx removal rate of the material can be up to 70%.

The process for simultaneously removing the nitrogen and sulfur substances is increasingly interesting since it has the advantages of cost-saving, low operation fee, and the like.

For example, CHEN Ying etc. has disclosed that, compared with the sorbent Na-$\gamma$-$Al_2O_3$ used in NOXSO process, the sorbent La-Cu-Na-$\gamma$-$Al_2O_3$ has higher adsorptive capacities for both $SO_2$ and NO, the storage capacities of $SO_2$ and NO on La-Cu-Na-$\gamma$-$Al_2O_3$ are 1.25 and 4.7 times, respectively, of those on Na-$\gamma$-$Al_2O_3$ when $SO_2$/NO ratio in the flue gas is within 5.1-3.5 ("Investigation of Novel Sorbent/Catalyst La-Cu-Na-$\gamma$-Al2O3 for SO2 and NO Simultaneous Removal from Flue Gases", Journal of Chemical Engineering of Chinese Universities, No. 1, Vol. 21, Feb. 2007, pages 64-69). The results show that the composition La-Cu-Na-$\gamma$-$Al_2O_3$ has a relatively good property of removing $SO_2$ and NO simultaneously.

Palomares et. al. (Appl. Catal. B: Environmental, Vol. 20 (1999) 257-266) disclose a Co/Mg/Al mixed oxide derived from hydrotalcites for the removal of SO2 and NOx.

Contents of the Invention

The technical problem to be solved by the present invention is to provide a novel composition and method which can more effectively and simultenously remove the sulfur oxides and nitrogen oxides in the flue gas.

In the first aspect, the present invention provides a sorbent composition as defined in claim 1.

The sorbent composition used in the present invention has a better adsorption property for the sulfur oxides and nitrogen oxides, and is particularly suitable for purifying the industry waste gas in order to simultaneously remove the sulfur oxides and nitrogen oxides. Compared with the prior arts, the inventive sorbent has not only a better property of removing sulfur and nitrogen substances, but also a better regeneration stability, when is used to purify the industry waste gas in order to simultaneously remove the sulfur oxides and nitrogen oxides

According to a preferred embodiment of the invention, the sorbent comprises, based on said sorbent, the refractory inorganic oxide matrix in an amount of 50-99 wt%, preferably 65-98 wt%, the metal component I in an amount of 0.5-35wt%, preferably 1-20wt%, and the metal component II in an amount of 0.5-35wt%, preferably 1-18wt%, wherein the amounts of the metal components I and II are calculated by the oxide thereof.

Said components I and II in said sorbent can be present in one or more form(s) selected from the oxides and/or salts with other components.

According to a preferred embodiment of the invention, said metal component I is selected from Na and K of group IA, Ba, Mg, and Ca of group IIA, and the mixture thereof, more preferably selected from Na and K of group IA, and the mixture thereof; said metal component II is selected from Cr of group VIB, Mn of group VIIB, Co of group VIII, and Zn of group IIB, and mixture thereof.

As characterized by the X-ray photoelectron spectroscopy, the metal component II in the sorbent is present in at least two different valence-states, i.e. $M_{II}^{i1+}$ and $M_{II}^{i2+}$, wherein $M_{II}$ represents the metal component II, and i1+ and i2+ represents the different valence-states of $M_{II}$.

According to a preferred embodiment of the invention, said metal component II comprises Cr which is present in the valence-states of $Cr^{6+}$ and $Cr^{3+}$. Calculated by the element and based on the total amount of Cr, the amount of $M_{II}^{i1+}$ in said metal component having different valence-states is 90-70%, more preferably 85-70%, and the amount of $M_{II}^{i2+}$ is 10-30%, more preferably 15-30%, wherein il < i2. Herein, the amount of the metal component having different valence-states is equal to $\dfrac{S_{MII}^{i}}{\sum S_{MII}^{i}} \times 100\%$, wherein, $M_{II}$ represents Cr, i represents the valency of Cr (e.g.

the i values for $Cr^{6+}$ and $Cr^{3+}$ are 6+ and 3+ respectively), S represents the area integration value of the corresponding characteristic peak of the Cr having different valencies in the ev ~ I spectrum (generated from e.g. Origin 7.0 software),

and $\sum S_{M_{II}}^{i}$ is the sum of the area integration values of the characteristic peaks of the Cr having different valencies.

According to a preferred embodiment of the invention, said metal component II comprises Mn which is present in the valence-states of $Mn^{4+}$ and $Mn^{2+}$. Calculated by the element and based on the total amount of Mn, the amount of $M_{II}^{i1+}$ in said metal component having different valence-states is 10-30%, more preferably 15-30%, and the amount of $M_{II}^{i2+}$ is 90-70%, more preferably 85-70%, wherein li < i2. Herein, the amount of the metal component having different valence-states is equal to $\dfrac{S_{MII}^{i}}{\sum S_{MII}^{i}} \times 100\%$, wherein, $M_{II}$ represents Mn, i represents the valency of Mn (e.g. the i values for $Mn^{4+}$ and $Mn^{2+}$ are 4+ and 2+ respectively), S represents the area integration value of the corresponding characteristic peak of the Mn having different valencies in the ev ~ I spectrum, and $\sum S_{M_{II}}^{i}$ is the sum of the area integration values of the characteristic peaks of the Mn having different valencies.

According to a preferred embodiment of the invention, said metal component II consists of Mn.

According to a preferred embodiment of the invention, said metal component II comprises Co which is present in the valence-states of $Co^{3+}$ and $Co^{4+}$. Calculated by the element and based on the total amount of Co, the amount of $M_{II}^{i1+}$ in said metal component having different valence-states is 10-30%, more preferably 15-30%, and the amount of $M_{II}^{i2+}$ is 90-70%, more preferably 85-70%, wherein il < i2. Herein, the amount of the metal component having different valence-states is equal to $\dfrac{S_{MII}^{i}}{\sum S_{MII}^{i}} \times 100\%$, wherein, $M_{II}$ represents Co, i represents the valency of Co (e.g.

the i values for $Co^{3+}$ and $Co^{4+}$ are 3+ and 4+ respectively), S represents the area integration value of the corresponding characteristic peak of the Co having different valencies in the ev ~ I spectrum, and $\sum S_{M_{II}}^{i}$ is the sum of the area integration values of the characteristic peaks of the Co having different valencies.

According to another preferred embodiment of the invention, said metal component II comprises Zn which is present in the valence-states of $Zn^{1+}$ and $Zn^{2+}$. Calculated by the element and based on the total amount of Zn, the amount of $M_{II}^{i1+}$ in said metal component having different valence-states is 10-28%, more preferably 12-25%, and the amount of $M_{II}^{i2+}$ is 90-72%, more preferably 88-75%, wherein il < i2. Herein, the amount of the metal component having different valence-states is equal to $\dfrac{S_{MII}^{i}}{\sum S_{MII}^{i}} \times 100\%$, wherein, $M_{II}$ represents Zn, i represents the valency of Zn (e.g. the i values for $Zn^{1+}$ and $Zn^{2+}$ are 1+ and 2+ respectively), S represents the area integration value of the corresponding characteristic peak of the Zn having different valencies in the ev ~ I spectrum, and $\sum S_{M_{II}}^{i}$ is the

sum of the area integration values of the characteristic peaks of the Zn having different valencies.

Said refractory inorganic oxide matrix having a specific surface area of more than 130 $m^2/g$ is selected from one or more of the following oxides having a specific surface area of more than 130 $m^2/g$, namely alumina, silica, titania, magnesium oxide, silica-alumina, silica-magnesium oxide, silica-zirconia, silica-thoria, silica-beryllia, silica-titania, silica-zirconia, titania-zirconia, silica-aluminia-thoria, silica-alumina-titania, silica-alumina-magnesium oxide, and silica-alumina-zirconia. The refractory inorganic oxide matrix having a specific surface area of more than 150 m$^2$/g is preferable. Alumina, silica, silica-alumina, or mixture thereof is more preferable. $\gamma$ Al$_2$O$_3$ is most preferable.

In the present invention, the specific surface area of the refractory inorganic oxide matrix is typically measured in accordance with the BET method using nitrogen as an adsorptive.

The sorbent provided in the present invention can consist of said metal component I, II (wherein said components I and II in said sorbent can be present in one or more form(s) selected from the oxides and/or salts with other components), and said refractory inorganic oxide matrix. However, the sorbent can also include any other components which can improve or are not adverse to the property of the inventive composition. For example, the inventive compostion can comprise one or more other component selected from group IB, IIIB, IVB, and VB, more preferably one or more of Cu, Ce, La, and V. Basing on the total amount of the composition, the amount of the other component selected from one or more element(s) of group IB, IIIB, IVB, and VB, more preferably one or more of Cu, Ce, La, and V, is not more than 35wt%, preferably not more than 17 wt%, and even more preferably not more than 15wt%.

In the second aspect, the present invention also provides a method for preparing the sorbent composition as stated in the first aspect, comprising the steps as defined in independent claim 8.

The baking temperature in said step (2) is preferably 624°C-1.000°C, more preferably 650°C-960°C, and most preferably 700°C-800°C. The baking time is 2-12 hrs, more preferably 4-11hrs.

As propriate, the composition provided by the present invention can be prepared into various shapes for ease of operation, e.g. microspheres, spheres, tablets, bars, or the like. The shaping can be conducted by a conventional method. For example, it can be prepared by mixing the compound containing said metal component I and/or the compound containing said metal component II with the refractory inorganic oxide matrix and/or the precursor thereof, extruding, and baking. Alteniatively, the refractory inorganic oxide matrix and/or the precursor thereof can be prepared into a shaped carrier, and then the metal components I and II are introduced by impregation. During the extrusion, a suitable amount of extrusion aids and/or adhesives can be added to facilitate the extrusion. The types and amounts of said extrusion aids and adhesives are well known to the artisan in the field of the preparation of shaped catalysts or sorbents.

When the sorbent includes other components which can improve or are not adverse to the property of the inventive composition, e.g. one or more other component selected from group IB, IIIB, IVB, and VB, more preferably one or more of Cu, Ce, La, and V, the preparation method further comprises the steps of introducing the other components.

Herein, the method for introducing said other component(s) is not limited.

The other component can be introduced into the composition during the introduction of the metal components I and II into the refractory inorganic oxide matrix and/or the precursor thereof in step (1), or introduced separately. For example, the compound contaning the other component can be mixed into the composition during the direct mixing of the compound containing the metal component I and/or the compound containing the metal component II with the refractory inorganic oxide matrix and/or the precursor thereof. Alternatively, the compound containing the other component and the compounds containing the components I and/or II can be formulated into a mix solution, and then the refractory inorganic oxide matrix and/or the precursor thereof are impregnated by the mix solution. It is also possible to separately formulate a solution of said other component for impregnation, and then impregnate the carrier before or after introducing the components I and/or II into the carrier. It is also possible to introduce said other component by means of impregnation after said step (2). Where the other component is introduced by impregnation after the step (2), there are drying and baking steps after the impregnation. Said drying is a conventional method, and the method conditions are not particular limited. Said baking is a conventional method, and the conditions for baking comprises: a baking temperature of 600-1100°C, preferably 650-960°C, most preferably 700°C 800°C; a baking time of 2-12 hrs, preferably 4-11 hr. Basing on the total amount of the sorbent, the amount of said component selected from one or more element (s) of group IB, IIIB, IVB, and VB, more preferably one or more of Cu, Ce, La, or V is not more than 35wt%, preferably not more than 17wt%, more preferably not more than 15wt%.

In the third aspect, the present invention further provides a process for removing the nitrogen oxides and sulfur oxides in the flue gas, comprising, under the conditions for the adsorptive separation given below, contacting the flue gas containing nitrogen oxides and sulfur oxides with the sorbent composition according to the first aspect or the sorbent composition prepared according to the second aspect.

The contacting of the flue gas containing sulfur and nitrogen oxides with the sorbent can be conducted in any adsorptive separation device, e.g. a fixed bed adsorption tower or fluidized bed adsorptive separation reactor.

According to the invention, the operation conditions for the adsorptive separation comprise a temperature of 0-300°C, preferably 0-100°C; a volume space velocity of the feedstock gases of 5000/hr-50000/hr, preferably 5000/hr-35000/hr; and a pressure of 0.1-3.0MPa, preferably 0.1-2.0MPa, provided that the contents of the sulfur and nitrogen oxides in the separated gas satisfy the requirements of "THE EMISSION STANDARD FOR THE BOILER AIR POLLUTANT (GB13271)", i.e. the content of the sulfur oxides being less than 315 ppm, and the content of the nitrogen oxides being less than 300ppm.

According to the process for removing the nitrogen oxides and sulfur oxides in the flue gas, it is advantegeous to include a regeneration step for said sorbent. There is no particular limit to the regeneration of the sorbent in the present invention method, provided that the property of the sorbent can be recovered sufficiently. However, it is surprising that the property of the inventive sorbent after being regenerated by the following steps is significantly superior to that of the sorbents provided in the prior art:

(1) contacting the composition to be generated with a reductive gas at 200 °C-800°C for 0.5-5 hrs;
(2) contacting the product obtained in above step (1) with an oxygen-containing gas at 200°C-800°C for 0.5-3 hrs; and
(3) again contacting the product obtained in step (2) with a reductive gas at 200°C-800°C for 0.5-5 hrs, wherein the reductive gas can be same or different to that in above step (1).

Said regeneration can be carried out in an in-situ adsorption apparatus, or a conventional ex-situ apparatus, e.g. an ex-situ fixed bed regenerator. The temperature in said step (1) is preferably 250°C-700°C, more preferably 280°C-650°C; the temperature in said step (2) is preferably 250°C-700°C, more preferably 280°C-650°C; and the temperature in said step (3) is preferably 250°C-700°C, more preferably 280°C-650°C. The temperatures in above steps (1), (2) and (3) are same or different each other.

Said reductive gas can be any reductive substance which is vaporizable at said temperature, e.g. and preferably one or more of carbon monoxide, hydrogen, methane, ethene, ethane, propylene, and propane. The contacting time in said step (1) is preferably 0.5-4 hrs, more preferably 0.5-3.5 hrs. The contacting time in said step (3) is preferably 0.5-4 hrs, more preferably 0.5-3.5 hrs. The amount of the reductive gas is not particularly limited, provided that a reductive atmosphere for said sorbent is sufficiently formed. The volume space velocity in the step (1) is 5000/hr - 50000/hr, preferably 5000/hr - 35000/hr. Preferably, the volume space velocity in the step (3) is 5000/hr - 50000/hr, more preferably 5000/hr - 35000/hr.

Said oxygen-containing gas can be any substance which can release oxygen at said temperature, e.g. and preferably one or more of oxygen, air, a mixture of oxygen and nitrogen gas, a mixture of oxygen and argon gas, and a mixture of oxygen and helium gas. The contacting time in said step (2) is preferably 0.5-3 hrs, more preferably 0.5-2.5 hrs. The amount of the oxygen-containing gas is not particularly limited, provided that an oxidative atmosphere for said sorbent is sufficiently formed.
The volume space velocity in the step (2) is 5000/hr - 50000/hr, preferably 5000/hr - 25000/hr.

According to the invention, the inert gas purging and replacing steps for the adsorption apparatus can also be included to satisfy the conditions for the contacting of the composition with the reductive or oxygen-containing gas. Said inert gas is selected from one or more of nitrogen, helium, argon, neon, krypton, xenon, and niton gas. The amount and time for purging are not particularly limited, provided that the requirements for the purging step are sufficiently satisfied. It is preferable that the volume space velocity of the purge gas is 5000/hr - 25000/hr, more preferably 10000/hr - 20000/hr, and the time is 0.5 hr-3.0 hr, more preferably 0.5 - 2hr.

According to the inventive method, when said contacting is conducted in a fixed bed adsorption tower, two or more adsorption towers are positioned, as the case may be, for switching operation to achieve a continuous process. When the adsorptive separation is switched between two towers, the reduction, oxidation and re-reduction in said regeneration process are conducted alternately in a same tower. When the sorptive separation is switched among more than two towers, the reduction, oxidation and re-reduction in said regeneration process are conducted alternately in either a same tower or two or more towers.

The present invention is useful for the removal of the SOx and/or NOx from the flue gas. For example, it can be used in the treatment of the SOx and/or NOx in the catalytic cracking process flue gas, coal burning power plant flue gas, and steel refinery flue gas, the removal of the SOx and/or NOx from the refuse incineration flue gas, and the treatment of other flue gas containing SOx and/or NOx.

As used herein and in the appended claims, the singular forms "a", "an", and "the" include plural reference unless the context clearly dictates otherwise.

Description of the Figure

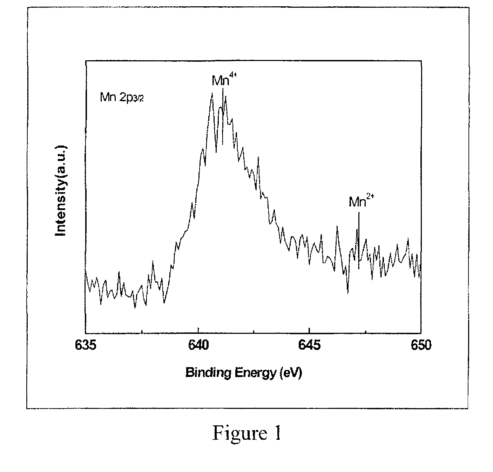

Figure 1 is the XPS spectrum of the material obtained in the inventive example 2-1.

Mode of Carrying out the Invention

The following examples further describe and demonstrate illustrative embodiments within the scope of the present invention. The examples are given solely for illustration.

Except to the extent stated otherwise, all the chemical agents used in the examples are chemically pure.

The contents of the metal component II having different valecy-states are measured by X-ray photoelectron spectroscopy. The X-ray photoelectron spectroscopy is the PHI Quantera SXM from ULVAC-PH INC, wherein a monochromator and Al anode target are used, X ray beam is $9\mu m$-1.5mm, the energy resolution is equal to 0.5eV, the sensitivity is 3M CPS, the incident angle is equal to 45° , and the vacuum degree of the analysis chamber is equal to $6.7\times10^{-8}$Pa.

The sputtering conditions comprises: spanning sputtergun $Ar^+$, area $1\times$ $1mm^2$, sputtering rate of about 20nm/min, power 2.0KV, emission current 20mA, and a nominal sample of thermally oxided $SiO_2/Si$. The sputtering results are generated from Origin 7.0 softerware to produce an ev(electron energy) ~ I(intensity) spectrum, and the area integration values of the respective characteristic peaks are calculated therefrom. The contents of the metal having differerent valecies are calculated according to the following formula:

$$S^i_{MII}\bigg/\sum S^i_{MII} \times 100\% \cdot$$

The characteristic peaks of the metal having different valecies in the X ray photoelectron spectroscopy (ev ~ I) can be determined with reference to the Handbook of X ray Photoelectron Spectroscopy (3.F. Moulder et.al, Perkin-Elmer Corporation: Eden Prairie, 1992, 2nd version).

Comparative Example 1-1

This comparative example was conducted to describe the sorbent prepared at a baking temperature equal to or below 600°C.

Raw materials: silica carrier (specific surface area $162m^2/g$), sphere, average particle diameter 1.22mm, a product from the Changling Catalyst Plant; $Mg(NO_3)_2$, $Cr(NO_3)_3$, and $La(NO_3)_3$ were commercially available from the Beijing Chemical Works.

Preparation method: 263g $Cr(NO_3)_3$ was dissolved by deionized water to 1 liter solution L1, 123g $La(NO_3)_3$ was dissolved by deionized water to 1 liter solution L2, and 592g $Mg(NO_3)_2$ solution was dissolved by deionized water to 1 liter solution L3. 1000g $SiO_2$ carrier was sequentially impregnated with L1, L2, and L3 for 2 hrs, a drying step was conducted at 110°C for 12 hrs after each impregnation step, and then the resultant mixture was baking at 600 °C for 10 hrs to obtain the composition La-Mg-Cr-$SiO_2$.

Composition: calculated by MgO, $Cr_2O_3$ and $La_2O_3$ respectively, the amount of Mg was 16wt%, the amount of Cr was 5wt%, and the amount of La was 4wt%.

As characterized by the X-ray photoelectron spectroscopy, Cr was present only in the form of $Cr^{3+}$.

Example 1-1

This example was conducted to describe the inventive sorbent and preparation thereof.

Raw materials: silica carrier (specific surface area $162m^2/g$), sphere, average particle diameter 1.22mm, a product from the Changling Catalyst Plant; $Mg(NO_3)_2$, $Cr(NO_3)_3$, and $La(NO_3)_3$ were commercially available from the Beijing Chemical Works.

Preparation method: 263g $Cr(NO_3)_3$ was dissolved by deionized water to 1 liter solution L1, 123g $La(NO_3)_3$ was dissolved by deionized water to 1 liter solution L2, 592g $Mg(NO_3)_2$ solution was dissolved by deionized water to 1 liter solution L3. 1000g $SiO_2$ carrier was sequentially impregnated with L1, L2, and L3 for 2 hrs, a drying step was conducted at 110°C for 12 hrs after each impregnation step, and the resultant mixture was baked at 700 °C for 10 hrs to obtain the inventive composition La-Mg-Cr-$SiO_2$.

Composition: calculated by MgO, $Cr_2O_3$ and $La_2O_3$ respectively, the amount of Mg was 16wt%, the amount of Cr was 5wt%, and the amount of La was 4wt%.

As characterized by the X-ray photoelectron spectroscopy, Cr was present in at least the two different forms of $Cr^{6+}$ and $Cr^{3+}$ Calculated by the element and based on the total content of $Cr^{6+}$ and $Cr^{3+}$ the content of $Cr^{3+}$ was 87%, and the content of $Cr^{6+}$ was 13%.

Example 1-2

This example was conducted to describe the inventive sorbent and preparation thereof.

Raw materials: $\gamma$-$Al_2O_3$ carrier (specific surface area $180m^2/g$), sphere, average particle diameter 1.3mm, a product from the Changling Catalyst Plant; $Cr(NO_3)_3$, and $K_2CO_3$ were commercially available from the Beijing Chemical Works.

Preparation method: the composition K-Cr-$\gamma$ -$Al_2O_3$ was subjected to a step-wise impregnation process as disclosed in Example 1-1. A drying step at 110 °C was conducted for 12 hrs after each impregnation step, and then the resultant composition was baked at 900°C for 8 hrs.

Composition: calculated by $K_2CO_3$ and $Cr_2O_3$ respectively, the amount of K in K-Cr-$\gamma$ -$Al_2O_3$ was 4wt%, and the amount of Cr was 17wt%.

As characterized by the X-ray photoelectron spectroscopy, Cr was present in at least the two different forms of $Cr^{6+}$ and $Cr^{3+}$. Calculated by the element and based on the total content of $Cr^{6+}$ and $Cr^{3+}$, the content of $Cr^{3+}$ was 91%, and the content of $Cr^{6+}$ was 9%.

Example 1-3

This example was conducted to describe the inventive sorbent and preparation thereof.

Raw materials: $\gamma$ -$Al_2O_3$ carrier (specific surface area 180m²/g), sphere, average particle diameter 1.3mm, a product from the Changling Catalyst Plant; $Mn(NO_3)_2$(50wt% solution), $Cr(NO_3)_3$, and $Na_2CO_3$ were commercially available from the Beijing Chemical Works.

Preparation method: the composition Na-Mn-Cr-$\gamma$ -$Al_2O_3$ was subjected to a step-wise impregnation process as disclosed in Example 1-1. A drying step at 110 °C was conducted for 12 hrs after each impregnation step, and then the resultant composition was baked at 800°C for 6 hrs.

Composition: calculated by $Na_2CO_3$, $MnO_2$, and $Cr_2O_3$ respectively, the amount of Na in Na-Mn-Cr-$\gamma$ -$Al_2O_3$ was 16wt%, the amount of Mn was 5wt%, and the amount of Cr was 13wt%.

As characterized by the X-ray photoelectron spectroscopy, Cr was present in at least the two different forms of $Cr^{6+}$ and $Cr^{3+}$. Calculated by the element and based on the total content of $Cr^{6+}$ and $Cr^{3+}$, the content of $Cr^{3+}$ was 81%, and the content of $Cr^{6+}$ was 19%; Mn was present in at least the two different forms of $Mn^{4+}$ and $Mn^{2+}$. Calculated by the element and based on the total content of $Mn^{4+}$ and $Mn^{2+}$, the content of $Mn^{4+}$ was 85%, and the content of $Mn^{2+}$ was 15%.

Example 1-4

This example was conducted to describe the inventive sorbent and preparation thereof.

Raw materials: $\gamma$ -$Al_2O_3$ carrier (specific surface area 180m²/g), sphere, average particle diameter 1.3mm, a product from the Changling Catalyst Plant; $Cr(NO_3)_3$, $Co(NO_3)_2$, $Na_2CO_3$, and $Ba(NO_3)_2$ were commercially available from the Beijing Chemical Works.

Preparation method: the composition Na-Cr-Co-Ba-$\gamma$-$Al_2O_3$ was subjected to a step-wise impregnation process as disclosed in Example 1-1. A drying step at 110 °C was conducted for 12 hrs after each impregnation step, and then the resultant composition was baked at 680°C for 5 hrs.

Composition: calculated by $Na_2CO_3$, $Cr_2O_3$, $Co_3O_4$, and BaO respectively, the amount of Na in Na-Cr-Co-Ba-$\gamma$ -$Al_2O_3$ was 3wt%, the amount of Cr was 10wt%, the amount of Co was 8wt%, and the amount of Ba was 8wt%. As characterized by the X-ray photoelectron spectroscopy, Cr was present in at least the two different forms of $cr^{6+}$ and $Cr^{3+}$. Calculated by the element and based on the total content of $Cr^{6+}$ and $Cr^{3+}$, the content of $Cr^{3+}$ was 85%, and the content of $Cr^{6+}$ was 15%.

Example 1-5

This example was conducted to describe the sorbent according to the invention and the preparation method thereof.

Raw materials: $\gamma$ -$Al_2O_3$ carrier (specific surface area 180m²/g), sphere, average particle diameter 1.3mm, a product from the Changling Catalyst Plant; $Cr(NO_3)_3$, $Cu(NO_3)_2$, and $Na_2CO_3$ were commercially available from the Beijing Chemical Works.

Preparation method: the composition Na-Cr-Cu-$\gamma$ -$Al_2O_3$ was subjected to a step-wise impregnation process as disclosed in Example 1-1. A drying step at 110 °C was conducted for 12 hrs after each impregnation step, and then the resultant composition was baked at 750°C for 4 hrs.

Composition: calculated by $Na_2CO_3$, $Cr_2O_3$, and CuO respectively, the amount of Na in Na-Cr-Cu-$\gamma$ -$Al_2O_3$ was 8wt%, the amount of Cr was 3wt%, and the amount of Cu was 15wt%.

In the composition, Cr was present in at least the two different forms of $Cr^{6+}$ and $Cr^{3+}$. Calculated by the element and based on the total content of $Cr^{6+}$ and $Cr^{3+}$, the content of $Cr^{3+}$ was 86%, and the content of $Cr^{6+}$ was 14%.

Example 1-6

This example was conducted to describe the inventive sorbent and preparation thereof.

Raw materials: $\gamma$ -$Al_2O_3$ carrier (specific surface area 180m$^2$/g), sphere, average particle diameter 1.3mm, a product from the Changling Catalyst Plant; $Cr(NO_3)_3$, $Zn(NO_3)_2$, and $Na_2CO_3$ were commercially available from the Beijing Chemical Works.

Preparation method: the composition Na- Cr -Zn-$\gamma$ -$Al_2O_3$ was subjected to a step-wise impregnation process as disclosed in Example 1-1. A drying step at 110 °C was conducted for 12 hrs after each impregnation step, and then the resultant composition was baked at 950°C for 6 hrs.

Composition: calculated by $Na_2CO_3$, $Cr_2O_3$, and ZnO respectively, the amount of Na in Na- Cr -Zn-$\gamma$ -$Al_2O_3$ was 18wt%, the amount of Cr was 8wt%, and the amount of Zn was 10wt%.

As characterized by the X-ray photoelectron spectroscopy, Cr was present in at least the two different forms of $Cr^{6+}$ and $Cr^{3+}$. Calculated by the element and based on the total content of $Cr^{6+}$ and $Cr^{3+}$, the content of $Cr^{3+}$ was 80%, and the content of $Cr^{6+}$ was 20%.

Example 1-7

This example was conducted to describe the effects of the inventive sorbent in simultaneously removing the sulfur and nitrogen substances.

The sorbent used in the experiment was La-Mg-Cr- $SiO_2$ prepared in Example 1-1. The experiment was conducted on a fixed bed continuous flow reactor. The reactor had an inside diameter of 8 mm. The material for removing the sulfur and nitrogen substances was used in an amount of 1 g. The adsorption temperature was 175°C. The volume flow rate of the feedstock gas was 300ml/min. The volume composition of the feedstock gas was: 0.3% $SO_2$; 0.1% NO; 4.5% $O_2$; and the balance being $N_2$. Before the feedstock gas was fed, the material bed layer for removing the sulfur and nitrogen substances was purged by $N_2$ in a volume flow rate of 300ml/min at 300 °C for 1 hr and then cooled to the adsorption temperature. The adsorption experiment was stopped when the concentration of the adsorbed tail gas tended to be stable. A $SO_2$ and NO analysis instrument was connected to the exit of the reactor to monitor the changes of the amounts of $SO_2$ and NO in the flue gas, wherein the $SO_2$ and the NO saturated adsorption capacity of the composition was calculated by the FIREFOX software developed by KANE Company, British (the same below). In this experiment, the $SO_2$ saturated adsorption capacity was 1.284 mmol/g, and the NO saturated adsorption capacity was 0.389 mmol/g.

Similarly, the sorbent composition prepared in Example 1-3 was tested, and the test results showed the $SO_2$ saturated adsorption capacity was 1.337 mmol/g, and the NO saturated adsorption capacity was 0.446 mmol/g.

Comparative Example 1-2

This example was conducted to describe the effects of the sorbent prepared according to the comparative example in simultaneously removing the sulfur and nitrogen substances.

The sorbent used in the experiment was La-Mg-Cr- $SiO_2$ prepared in Comparative Example 1-1. The experiment was conducted on a fixed bed continuous flow reactor. The reactor had an inside diameter of 8 mm. The material for removing the sulfur and nitrogen substances was used in an amount of 1 g. The adsorption temperature was 50°C. The volume flow rate of the feedstock gas was 300ml/min. The volume composition of the feedstock gas was: 0.3% $SO_2$; 0.1% NO; 4.5% $O_2$; and the balance being $N_2$. Before the feedstock gas was fed, the material bed layer for removing the sulfur and nitrogen substances was purged by $N_2$ in a volume flow rate of 300ml/min at 300°C for 1 hr and then cooled to the adsorption temperature. The adsorption experiment was stopped when the concentration of the adsorbed tail gas tended to be stable, and then $N_2$ was used to purge the residual mix gas in the tube wall for 10 mins. A $SO_2$ and NO analysis instrument was connected to the exit of the reactor to monitor the changes of the amounts of $SO_2$ and NO in the flue gas. In the experiment, the $SO_2$ saturated adsorption capacity was 1.201 mmol/g, and the NO saturated adsorption capacity was 0.310 mmol/g.

Example 1-8

This experiment was conducted to describe the regeneration property of the sorbent of the present invention.

The sorbent to be regenerated was the adsorption-saturated samples in Example 1-7, represented by SORB1-1 (the sorbent of Example 1-1) and SORB1-2 (the sorbent of Example 1-3). The regeneration was conducted on an ex-situ regenerator which was a tube reactor having an inside diameter of 10 mm.

1g SORB 1-1 to be regenerated was placed in the reactor device. The temperature in the reactor was increased to 350 °C in a temperature ramp rate of 10°C/min under the nitrogen purge in a space velocity of 10000/hr. After being stable for 30 mins, the nitrogen purge was stopped, and then at the regeneration temperature of 350 °C, the SORB1-1 to be regenerated was contacted with CO gas in a space velocity of 15000/hr for 2 hrs (step 1); the reactor was purged by nitrogen gas in a space velocity of 10000/hr for 30 mins, and then the SORB1-1 reduced in the previous step was contacted with oxygen gas in a space velocity of 15000/hr for 30mins (step 2); the reactor was purged by nitrogen gas in a space velocity of 10000/hr for 30 mins, and then the SORB1-1 oxidized in the previous step was contacted with methane gas in a space velocity of 15000/hr for 1hr (step 3); subsequently, nitrogen gas was fed in a space velocity of 10000/hr to purge the reactor until the temperature of the reactor was decreased to the ambient temperature. Accordingly, the regenerated sorbent composition SORB 1-1-1 was obtained.

The SORB1-1-1 was evaluated according to the evaluation conditions of Example 1-7. The experimental results were: the $SO_2$ saturated adsorption capacity was 1.080 mmol/g (84.1% of the capacity of the fresh sorbent), and the NO saturated adsorption capacity was 0.378 mmol/g (97.1% of the capacity of the fresh sorbent).

SORB 1-2 was tested similarly, except that the regeneration temperature was 600°C, and the times for contacting with the reductive or oxidative gas in regeneration steps (1), (2) and (3) were 1hr, 2hrs and 3hrs respectively. The experimental results were: the $SO_2$ saturated adsorption capacity was 1.201 mmol/g (89.8% of the capacity of the fresh sorbent), and the NO saturated adsorption capacity was 0.412 mmol/g (92.3% of the capacity of the fresh sorbent).

Comparative Example 1-3

This example was conducted to describe the regeneration property of the sorbent composition prepared according to the Comparative Example.

The sorbent to be regenerated was the adsorption-saturated samples in Comparative Example 1-2, and the regeneration steps were same to those for SORB1-1 in Example 1-8.

The evaluation conditions for the regenerated sample were same to those in Comparative Example 1-2. The experimental results were: the $SO_2$ saturated adsorption capacity was 0.785 mmol/g (63.3% of the capacity of the fresh sorbent), and the NO saturated adsorption capacity was 0.241 mmol/g (58.6% of the capacity of the fresh sorbent).

Comparative Example 2-1

This comparative example was conducted to describe the sorbent prepared at a baking temperature equal to or below 600°C.

Raw materials: $\gamma$-$Al_2O_3$ carrier (specific surface area 180m²/g), sphere, average particle diameter 1.3mm, a product from the Changling Catalyst Plant; $Ba(NO_3)_2$, $La(NO_3)_3$, and 50wt% $Mn(NO_3)_2$ solution ( all being commercially available from the Beijing Chemical Works).

Preparation method: 25g $Ba(NO_3)_2$ was dissolved by deionized water to 1 liter solution L1, 100g $La(NO_3)_3$ was dissolved by deionized water to 1 liter solution L2, 542g $Mn(NO_3)_2$ solution was dissolved by deionized water to 1 liter solution L3. 1000g $\gamma$-$Al_2O_3$ carrier was sequentially impregnated with L1, L2, and L3 for 2 hrs, a drying step was conducted at 110°C for 12 hrs after each impregnation step, and the resultant mixture was baked at 600 °C for 10 hrs to obtain the composition La-Mn-Ba-$\gamma$-$Al_2O_3$.

Composition: the loading amounts of the components were calculated by BaO, $MnO_2$ and $La_2O_3$ respectively; the amount of Ba was 1wt%, the amount of Mn was 13wt%, and the amount of La was 4wt%.

As characterized by the X-ray photoelectron spectroscopy, Mn was present in the form of $Mn^{4+}$, and no other valency form of Mn was detected.

Example 2-1

This example was conducted to describe the inventive sorbent and preparation thereof.

Raw materials: same to Comparative Example 2-1.

Preparation method: 25g $Ba(NO_3)_2$ was dissolved by deionized water to 1 liter solution L1, 100g $La(NO_3)_3$ was dissolved by deionized water to 1 liter solution L2, and 542g $Mn(NO_3)_2$ solution was dissolved by deionized water to 1 liter solution L3. 1000g $\gamma$-$Al_2O_3$ carrier was sequentially impregnated with L1, L2, and L3 for 2 hrs, a drying step was conducted at 110°C for 12 hrs after each impregnation step, and the resultant mixture was baked at 900°C for 10 hrs, giving the inventive composition La-Mn-Ba-$\gamma$-$Al_2O_3$.

Composition: the loading amounts of the components were calculated by BaO, $MnO_2$ and $La_2O_3$ respectively; the amount of Ba was 1wt%, the amount of Mn was 13wt%, and the amount of La was 4wt%.

As characterized by the X-ray photoelectron spectroscopy, Mn was present in at least the two different forms of $Mn^{4+}$ and $Mn^{2+}$. Calculated by the element and based on the total content of $Mn^{4+}$ and $Mn^{2+}$, the content of $Mn^{4+}$ was 75%, the content of $Mn^{2+}$ was 25%.

The corresponding XPS spectrum was shown in Fig. 1.

Comparative Example 2-2

This example was conducted to describe the sorbent prepared without the metal component II as defined in the present invention.

Raw materials: $\gamma$ -Al$_2$O$_3$ carrier (specific surface area 180m$^2$/g), sphere, average particle diameter 1.3mm, a product from the Changling Catalyst Plant. Na$_2$CO$_3$, Cu(NO$_3$)$_2$, and La(NO$_3$)$_3$ were commercially available from the Beijing Chemical Works.

Preparation method: 85g Na$_2$CO$_3$, 158g Cu(NO$_3$)$_2$ and 124g La(NO$_3$)$_3$ were dissolved by deionized water to 1 liter solution. The solution was used to impregnate 1000g $\gamma$ -Al$_2$O$_3$ carrier at ambient temperature for 2 hrs, followed by drying the impregnated carrier at 110°C for 12 hrs, and the resultant mixture was baked at 800°C for 10 hrs, giving the reference composition La-Cu-Na-$\gamma$ -Al$_2$O$_3$.

Composition: the loading amounts of the components were calculated by Na$_2$CO$_3$, CuO and La$_2$O$_3$ respectively; the amount of Na was 8wt%, the amount of Cu was 5wt%, and the amount of La was 5wt%.

Comparative Example 2-3 (comparison for the carriers)

This example was conducted to describe the sorbent prepared by the carrier having a lower specific surface area.

Raw materials: Kaolin (specific surface area 28m$^2$/g), Na$_2$CO$_3$, Mn(NO$_3$)$_2$, and La(NO$_3$)$_3$ were commercially available from the Beijing Chemical Works.

Preparation method: 85g Na$_2$CO$_3$, 160g Mn(NO$_3$)$_2$ and 132g La(NO$_3$)$_3$ were dissolved by deionized water to 1 liter solution. The solution was used to impregnate 1000g Kaolin carrier at ambient temperature for 2 hrs, followed by drying the impregnated carrier at 110°C for 12 hrs, and the resultant mixture was baked at 800°C for 10 hrs, giving the composition La-Mn-Na-Kaolin.

Composition: the loading amounts of the components were calculated by Na$_2$CO$_3$, MnO$_2$ and La$_2$O$_3$ respectively; the amount of Na was 8wt%, the amount of Mn was 6wt%, and the amount of La was 6wt%.

Example 2-2-1

This example was conducted to describe the sorbent according to the invention and the preparation method thereof.

Raw materials: $\gamma$ -Al$_2$O$_3$ carrier (specific surface area 180m$^2$/g), sphere, average particle diameter 1.3mm, a product from the Changling Catalyst Plant. Na$_2$CO$_3$, Mn(NO$_3$)$_2$, and La(NO$_3$)$_3$ were commercially available from the Beijing Chemical Works.

Preparation method: 85g Na$_2$CO$_3$, 153g Mn(NO$_3$)$_2$ and 124g La(NO$_3$)$_3$ were dissolved by deionized water to 1 liter solution. The solution was used to impregnate 1000g $\gamma$ -Al$_2$O$_3$ carrier at ambient temperature for 2 hrs, followed by drying the impregnated carrier at 110°C for 12 hrs, and the resultant mixture was baked at 800°C for 10 hrs, giving the inventive composition La-Mn-Na-$\gamma$ -Al$_2$O$_3$.

Composition: the loading amounts of the components were calculated by Na$_2$CO$_3$, MnO$_2$ and La$_2$O$_3$ respectively; the amount of Na was 8wt%, the amount of Mn was 5wt%, and the amount of La was 5wt%.

As characterized by the X-ray photoelectron spectroscopy, Mn was present in at least the two different forms of Mn$^{4+}$ and Mn$^{2+}$. Calculated by the element and based on the total content of Mn$^{4+}$ and Mn$^{2+}$, the content of Mn$^{4+}$ was 78%, and the content of Mn$^{2+}$ was 22%.

Example 2-2-2, 2-2-3 and 2-2-4

The raw materials and preparation methods were same to those in above Example 2-2-1, except that the refractory inorganic oxide matrix having a specific surface area of 132m$^2$/g(a silica from QiLu Catalyst Plant), 155m$^2$/g (a silica from LanZhou Catalyst Plant) and 170m$^2$/g(a $\gamma$ -Al$_2$O$_3$ from QiLu Catalyst Plant) were used. The Mn in all the resultant compositions was present in at least the two different forms of Mn$^{4+}$ and Mn$^{2+}$, and the contents thereof were fallen into the scope as stated in the present invention.

Example 2-3

This example was conducted to describe the inventive sorbent and preparation thereof.

Raw materials: $\gamma$-Al$_2$O$_3$ carrier (specific surface area 180m$^2$/g), sphere, average particle diameter 1.22mm, a product from the Changling Catalyst Plant; Mn(NO$_3$)$_2$(50wt% solution), and K$_2$CO$_3$ were commercially available from the Beijing Chemical Works.

40g K$_2$CO$_3$ was dissolved by deionized water to 1 liter solution L1, and 535g Mn(NO$_3$)$_2$ solution was dissolved

by deionized water to 1 liter solution L2. 1000g $\gamma$-Al$_2$O$_3$ carrier was sequentially impregnated with L1 and L2 for 2 hrs, a drying step was conducted at 110°C for 12 hrs after each impregnation step, and the resultant mixture was baked at 750°C for 8 hrs, giving the inventive composition K-Mn-$\gamma$-Al$_2$O$_3$.

Calculated by K$_2$CO$_3$ and MnO$_2$, the amount of K in K-Mn-$\gamma$-Al$_2$O$_3$ composition was 4wt%, and the amount of Mn was 13wt%.

As characterized by the X-ray photoelectron spectroscopy, Mn was present in at least the two different forms of Mn$^{4+}$ and Mn$^{2+}$. Calculated by the element and based on the total content of Mn$^{4+}$ and Mn$^{2+}$, the content of Mn$^{4+}$ was 71%, and the content of Mn$^{2+}$ was 29%.

Example 2-4

This example was conducted to describe the inventive sorbent and preparation thereof.

Raw materials: $\gamma$-Al$_2$O$_3$ carrier (specific surface area 180m$^2$/g), sphere, average particle diameter 1.3mm, a product from the Changling Catalyst Plant; Mn(NO$_3$)$_2$(50wt% solution), Co(NO$_3$)$_2$, Na$_2$CO$_3$, and Ba(NO$_3$)$_2$ were commercially available from the Beijing Chemical Works.

The sample was prepared by a step-wise impregnation process. A drying step at 110 °C was conducted for 12 hrs after each impregnation step, the resultant was baked at 680°C for 6 hrs, and the other preparation steps were same to those in Example 2-1. The composition Na-Mn-Co-Ba-$\gamma$-Al$_2$O$_3$ was prepared; calculated by Na$_2$CO$_3$, MnO$_2$, Co$_3$O$_4$ and BaO respectively, the amount of Na was 6wt%, the amount of Mn was 10wt%, the amount of Co was 8wt%, and the amount of Ba was 5wt%.

As characterized by the X-ray photoelectron spectroscopy, Mn was present in at least the two different forms of Mn$^{4+}$ and Mn$^{2+}$. Calculated by the element and based on the total content of Mn$^{4+}$ and Mn$^{2+}$, the content of Mn$^{4+}$ was 80%, and the content of Mn$^{2+}$ was 2Q°/fl.

Example 2-5

This example was conducted to describe the inventive sorbent and preparation thereof.

Raw materials: $\gamma$-Al$_2$O$_3$ carrier (specific surface area 1.80m$^2$/g), sphere, average particle diameter 1.3mm, a product from the Changling Catalyst Plant; Mn(NO$_3$)$_2$(50wt% solution), Cu(NO$_3$)$_2$, and Na$_2$CO$_3$ were commercially available from the Beijing Chemical Works.

The sample was prepared by a step-wise impregnation process. A drying step at 110 °C was conducted for 12 hrs after each impregnation step, and then the resultant composition was baked at 750°C for 4 hrs, and the other preparation steps were same to those in Example 2-1. The composition Na-Mn-Cu-$\gamma$-Al$_2$O$_3$ was prepared; calculated by Na$_2$CO$_3$, MnO$_2$, and CuO respectively, the amount of Na was 8wt%, the amount of Mn was 3wt%, and the amount of Cu was 15wt%.

As characterized by the X-ray photoelectron spectroscopy, Mn was present in at least the two different forms of Mn$^{4+}$ and Mn$^{2+}$. Calculated by the element and based on the total content of Mn$^{4+}$ and Mn$^{2+}$, the content of Mn$^{4+}$ was 84%, and the content of Mn$^{2+}$ was 16%.

Example 2-6

This example was conducted to describe the inventive sorbent and preparation thereof.

Raw materials: $\gamma$-Al$_2$O$_3$ carrier (specific surface area 180m$^2$/g), sphere, average particle diameter 1.3mm, a product from the Changling Catalyst Plant; Mn(NO$_3$)$_2$(50wt% solution), Zn(NO$_3$)$_2$, and Na$_2$CO$_3$ were commercially available from the Beijing Chemical Works.

The sample was prepared by a step-wise impregnation process. A drying step at 110 °C was conducted for 12 hrs after each impregnation step, and then the resultant composition was baked at 950°C for 4 hrs, and the other preparation steps were same to those in Example 2-1. The composition Na-Mn-Zn-$\gamma$-Al$_2$O$_3$ was prepared; calculated by Na$_2$CO$_3$, MnO$_2$, and ZnO respectively, the amount of Na was 18wt%, the amount of Mn was 8wt%, and the amount of Zn was 10wt%.

As characterized by the X-ray photoelectron spectroscopy, Mn was present in at least the two different forms of Mn$^{4+}$ and Mn$^{2+}$. Calculated by the element and based on the total content of Mn$^{4+}$ and Mn$^{2+}$ the content of Mn$^{4+}$ was 77%, and the content of Mn$^{2+}$ was 23%.

Example 2-7

This example was conducted to describe the effects of the inventive sorbent in simultaneously removing the sulfur and nitrogen substances.

The sorbent used in the experiment was those prepared in Examples 2-1, 2-2-1, 2-2-2, 2-2-3, 2-2-4 and 2-3. The experiment was conducted on a fixed bed continuous flow reactor. The reactor had an inside diameter of 8 mm. The sorbents were used in an amount of 1 g. The adsorption temperature was 175°C. The volume flow rate of the feedstock gas was 300ml/min. The volume composition of the feedstock gas was: 0.3% $SO_2$; 0.1% NO; 4.5% $O_2$; and the balance being $N_2$. Before the feedstock gas was fed, the material bed layer for removing the sulfur and nitrogen substances was purged by $N_2$ in a volume flow rate of 300ml/min at 300°C for 1 hr and then cooled to the adsorption temperature. The adsorption experiment was stopped when the concentration of the adsorbed tail gas tended to be stable. A $SO_2$ and NO analysis instrument was connected to the exit of the reactor to monitor the changes of the amounts of $SO_2$ and NO in the flue gas. Regarding the Example 2-1 sorbent: the $SO_2$ saturated adsorption capacity was 1.320 mmol/g, and the NO saturated adsorption capacity was 0.446 mmol/g ; regarding Example 2-2-1, 2-2-2, 2-2-3 and 2-2-4 sorbents:the $SO_2$ saturated adsorption capacity were 1.315, 1.270, 1.286, and 1.308 mmol/g respectively, and the NO saturated adsorption capacity were 0.440, 0.412, 0.420, and 0.429 mmol/g respectively; regarding Example 2-3 sorbent: the $SO_2$ saturated adsorption capacity was 1.319 mmol/g, and the NO saturated adsorption capacity was 0.434 mmol/g.

Comparative Example 2-4

This experiment was conducted to describe the the effects of the sorbent prepared according to Comparative Example 2-1, 2-2 and 2-3 in simultaneously removing the sulfur and nitrogen substances.

The sorbents used in the experiment were those prepared in Comparative Examples 2-1, 2-2 and 2-3. The experiment was conducted on a fixed bed continuous flow reactor. The reactor had an inside diameter of 8 mm. The material for removing the sulfur and nitrogen substances was used in an amount of 1 g. The adsorption temperature was 50°C. The volume flow rate of the feedstock gas was 300ml/min. The volume composition of the feedstock gas was: 0.3% $SO_2$; 0.1% NO; 4.5% $O_2$; and the balance being $N_2$. Before the feedstock gas was fed, the material bed layer for removing the sulfur and nitrogen substances was purged by $N_2$ in a volume flow rate of 300ml/min at 300°C for 1 hr and then cooled to the adsorption temperature. The adsorption experiment was stopped when the concentration of the adsorbed tail gas tended to be stable, and then $N_2$ was used to purge the residual mix gas in the tube wall for 10 mins. A $SO_2$ and NO analysis instrument was connected to the exit of the reactor to monitor the changes of the amounts of $SO_2$ and NO in the flue gas. In the experiment, regarding the sorbent prepared in Comparative Example 2-1: the $SO_2$ saturated adsorption capacity was 1.209 mmol/g, and the NO saturated adsorption capacity was 0.308 mmol/g; regarding the sorbent, prepared in Comparative Example 2-2: the $SO_2$ saturated adsorption capacity was 1.130 mmol/g, and the NO saturated adsorption capacity was 0.297 mmol/g; regarding the sorbent prepared in Comparative Example 2-3: the $SO_2$ saturated adsorption capacity was 1.121 mmol/g, and the NO saturated adsorption capacity was 0.278 mmol/g.

Example 2-8

This experiment was conducted to describe the property of the regenerated sorbent prepared according to Examples 2-1 and 2-2-1 in removing the sulfur and nitrogen substances.

The sorbent to be regenerated was the adsorption-saturated sample in Example 2-7, represented by SORB2-1 (the sorbent of Example 2-1) and SORB2-2 (the sorbent of Example 2-2-1). The regeneration was conducted on an ex-situ regenerator which was a tube reactor having an inside diameter of 10 mm.

1g SORB2-1 (or SORB2-2) to be regenerated was placed in the reactor device. The temperature in the reactor was increased to 350 °C in a temperature ramp rate of 10°C/min under the nitrogen purge in a space velocity of 10000/hr. After being stable for 30 mins, the nitrogen purge was stopped, and then at the regeneration temperature of 350 °C, the SORB2-1 (or SORB2-2) to be regenerated was contacted with CO gas in a space velocity of 15000/hr for 2 hrs; the reactor was purged by nitrogen gas in a space velocity of 10000/hr for 30 mins, and then the SORB2-1 (or SORB2-2) reduced in the previous step was contacted with oxygen gas in a space velocity of 15000/hr for 30mins; the reactor was purged by nitrogen gas in a space velocity of 10000/hr for 30 mins, and then the SORB2-1 (or SORB2-2) oxidized in the previous step was contacted with methane gas in a space velocity of 15000/hr for 1hr; subsequently, nitrogen gas was fed in a space velocity of 10000/hr to purge the reactor until the temperature of the reactor was decreased to the ambient temperature. Accordingly, the regenerated sorbent composition SORB2-1-1(or SORB2-2-1) was obtained.

The SORB2-1-1 and SORB2-2-1 were evaluated according to the evaluation conditions of Example 2-7. The experimental results were: regarding SORB2-1-1: the $SO_2$ saturated adsorption capacity was 1.152 mmol/g (87.3% of the capacity of the fresh sorbent), and the NO saturated adsorption capacity was 0.396 mmol/g (88.8% of the capacity of the fresh sorbent); regarding SORB2-2-1: the $SO_2$ saturated adsorption capacity was 1.205 mmol/g (91.6% of the capacity of the fresh sorbent), and the NO saturated adsorption capacity was 0.400 mmol/g (90.9% of the capacity of the fresh sorbent).

Comparative Example 2-5

This example was conducted to describe the regeneration property of the sorbent composition prepared according to the Comparative Example.

The sorbent to be regenerated was the adsorption-saturated sample in Comparative Example 2-4, and the regeneration steps were same to those in Example 2-8.

The evaluation conditions for the regenerated sample were same to those in Comparative Example 2-4. The experimental results were: regenerated Comparative Example 2-1 sample: the $SO_2$ saturated adsorption capacity was 0.802 mmol/g (66.3% of the capacity of the fresh sorbent), and the NO saturated adsorption capacity was 0.224 mmol/g (72.7% of the capacity of the fresh sorbent); regenerated Comparative Example 2-2 sample: the $SO_2$ saturated adsorption capacity was 0.781 mmol/g (69.1% of the capacity of the fresh sorbent), and the NO saturated adsorption capacity was 0.215 mmol/g (72.4% of the capacity of the fresh sorbent); regenerated Comparative Example 2-3 sample: the $SO_2$ saturated adsorption capacity was 0.811 mmol/g (72.3% of the capacity of the fresh sorbent), and the NO saturated adsorption capacity was 0.202 mmol/g (72.7% of the capacity of the fresh sorbent).

Comparative Example 3-1

This comparative example was conducted to describe the sorbent prepared at a baking temperature equal to or below 600°C.

Raw materials: $\gamma$ -$Al_2O_3$ carrier (specific surface area $180m^2$/g), sphere, average particle diameter 1.3mm, a product from the Changling Catalyst Plant; $Mg(NO_3)_2$ and $Co(NO_3)_2$ were commercially available from the Beijing Chemical Works.

Preparation method: 259g Mg $(NO_3)_2$ was dissolved by deionized water to 1 liter solution L1, and 544g Co $(NO_3)_2$ was dissolved by deionized water to 1 liter solution L2. 1000g $\gamma$ -$Al_2O_3$ carrier was sequentially impregnated with L 1 and L2 for 2 hrs, a drying step was conducted at 110 °C for 12 hrs after each impregnation step, and the resultant mixture was baked at 600°C for 10 hrs to obtain the composition Mg-Co-$\gamma$ -$Al_2O_3$.

Composition: the loading amounts of the components were calculated by MgO and $Co_3O_4$ respectively; the amount of Mg was 7wt%, and the amount of Co was 15wt%.

As characterized by the X-ray photoelectron spectroscopy, in the composition, Co was present in only the form of $Co^{4+}$.

Example 3-1

This example was conducted to describe the inventive sorbent and preparation thereof.

Raw materials: $\gamma$ -$Al_2O_3$ carrier (specific surface area $180m^2$/g), sphere, average particle diameter 1.3mm, a product from the Changling Catalyst Plant; $Mg(NO_3)_2$ and $Co(NO_3)_2$ were commercially available from the Beijing Chemical Works.

Preparation method: 259g Mg $(NO_3)_2$ was dissolved by deionized water to 1 liter solution L1, 544g $Co(NO_3)_2$ was dissolved by deionized water to 1 liter solution L2. 1000g $\gamma$ -$Al_2O_3$ carrier was sequentially impregnated with L1 and L2 for 2 hrs, a drying step was conducted at 110°C for 12 hrs after each impregnation step, and the resultant mixture was baked at 900°C for 10 hrs to obtain the inventive composition Mg-Co-$\gamma$ -$Al_2O_3$.

Composition: the loading amounts of the components were calculated by MgO, and $Co_3O_4$ respectively; the amount of Mg was 7wt%, and the amount of Co was 15wt%.

As characterized by the X-ray photoelectron spectroscopy, the transition metal Co was present in at least the forms of $Co^{3+}$ and $Co^{4+}$ respectively. Calculated by the element and based on the total content of $Co^{3+}$ and $Co^{4+}$, the content of $Co^{3+}$ was 17%, the content of $Co^{4+}$ was 83%.

Example 3-2

This example was conducted to describe the inventive sorbent and preparation thereof.

Raw materials: silica carrier (specific surface area $162m^2$/g), sphere, average particle diameter 1.22mm, a product from the Changling Catalyst Plant; $Co(NO_3)_2$ and $K_2CO_3$ were commercially available from the Beijing Chemical Works.

Preparation method: the composition K-Co-$SiO_2$ was prepared by a step-wise impregnation process as disclosed in Example 3-1. A drying step at 110 °C was conducted for 12 hrs after each impregnation step, and then the resultant composition was baked at 750°C for 8 hrs.

Composition: calculated by $K_2CO_3$ and $Co_3O_4$ respectively, the amount of K in the composition K-Co-$SiO_2$ was 4wt%, and the amount of Co was 13wt%.

As characterized by the X-ray photoelectron spectroscopy, in the composition, Co was present in at least the forms of $Co^{3+}$ and $Co^{4+}$ respectively. Calculated by the element and based on the total content of $Co^{3+}$ and $Co^{4+}$, the content of $Co^{3+}$ was about 11%, and the content of $Co^{4+}$ was about 89%.

Example 3-3

This example was conducted to describe the inventive sorbent and preparation thereof.
Raw materials: $\gamma$ -$Al_2O_3$ carrier (same to Example 3-1); $Ba(NO_3)_2$, $Co(NO_3)_2$, and $La(NO_3)_3$ were commercially available from the Beijing Chemical Works.
Preparation method: the composition Ba-Co-La-$\gamma$ -$Al_2O_3$ was prepared by a step-wise impregnation process as disclosed in Example 3-1. A drying step at 110 °C was conducted for 12 hrs after each impregnation step, the resultant was baked at 650°C for 7hrs.
Composition: calculated by BaO, $La_2O_3$ and $Co_3O_4$ respectively, the amount of Ba in Ba-Co-La-$\gamma$ -$Al_2O_3$ was 4wt%, the amount of La was 13wt%, and the amount of Co was 5wt%.
As characterized by the X-ray photoelectron spectroscopy, in the composition, Co was present in at least the forms of $Co^{3+}$ and $Co^{4+}$ respectively. Calculated by the element and based on the total content of $Co^{3+}$ and $Co^{4+}$ the content of $Co^{3+}$ was 15%, and the content of $Co^{4+}$ was 85%.

Example 3-4

This example was conducted to describe the inventive sorbent and preparation thereof.
Raw materials: $\gamma$ -$Al_2O_3$ carrier (specific surface area 180m$^2$/g), sphere, average particle diameter 1.3mm, a product from the Changling Catalyst Plant; $Cr(NO_3)_3$, $Co(NO_3)_2$, $K_2CO_3$, and $CaCO_3$ were commercially available from the Beijing Chemical Works.
Preparation method: the composition K-Co-Cr-Ca-$\gamma$ -$Al_2O_3$ was prepared by a step-wise impregnation process as disclosed in Example 3-1. A drying step at 110 °C was conducted for 12 hrs after each impregnation step, and then the resultant composition was baked at 900°C for 6 hrs.
Composition: calculated by $K_2CO_3$, $Cr_2O_3$, $Co_3O_4$, and CaO respectively, the amount of K in the composition K-Co-Cr-Ca-$\gamma$ -$Al_2O_3$ was 7wt%, the amount of Cr was 8wt%, the amount of Co was 17wt%, and the amount of Ca was 4wt%.
As characterized by the X-ray photoelectron spectroscopy, in the composition, Co was present in at least the forms of $Co^{3+}$ and $Co^{4+}$ respectively. Calculated by the element and based on the total content of $Co^{3+}$ and $Co^{4+}$, the content of $Co^{3+}$ was 15%, and the content of $Co^{4+}$ was 85%.

Example 3-5

This example was conducted to describe the inventive sorbent and preparation thereof.
Raw materials: $\gamma$ -$Al_2O_3$ carrier (specific surface area 180m$^2$/g), sphere, average particle diameter 1.3mm, a product from the Changling Catalyst Plant; $Mn(NO_3)_2$(50wt% solution), $Co(NO_3)_2$, and $Na_2CO_3$ were commercially available from the Beijing Chemical Works.
Preparation method: the composition Na-Mn-Co-$\gamma$-$Al_2O_3$ was prepared by a step-wise impregnation process as disclosed in Example 3-1. A drying step at 110 °C was conducted for 12 hrs after each impregnation step, the resultant was baked at 700°C for 6 hrs.
Composition: calculated by $Na_2CO_3$, $MnO_2$, and $Co_3O_4$ respectively, the amount of Na in Na-Mn-Co-$\gamma$-$Al_2O_3$ was 16wt%, the amount of Mn was 5wt%, and the amount of Co was 13wt%.
As characterized by the X-ray photoelectron spectroscopy, in the composition, Co was present in at least the forms of $Co^{3+}$ and $Co^{4+}$ respectively. Calculated by the element and based on the total content of $Co^{3+}$ and $Co^{4+}$, the content of $Co^{3+}$ was 7%, and the content of $Co^{4+}$ was 93%.

Example 3-6

This example was conducted to describe the inventive sorbent and preparation thereof.
Raw materials: $\gamma$-$Al_2O_3$ carrier (specific surface area 180m$^2$/g), sphere, average particle diameter 1.3mm, a product from the Changling Catalyst Plant; $Co(NO_3)_2$, $Cu(NO_3)_2$, and $Na_2CO_3$ were commercially available from the Beijing Chemical Works.
Preparation method:the composition Na-Co-Cu-$\gamma$-$Al_2O_3$ was prepared by a step-wise impregnation process as disclosed in Example 3-1. A drying step at 110 °C was conducted for 12 hrs after each impregnation step, and then the resultant composition was baked at 750°C for 5 hrs.

Composition: calculated by Na$_2$CO$_3$, Co$_3$O$_4$, and CuO respectively, the amount of Na in Na-Co-Cu-γ-Al$_2$O$_3$ was 8wt%, the amount of Co was 3wt%, and the amount of Cu was 15wt%.

As characterized by the X-ray photoelectron spectroscopy, in the composition, Co was present in at least the forms of Co$^{3+}$ and Co$^{4+}$ respectively. Calculated by the element and based on the total content of Co$^{3+}$ and Co$^{4+}$, the content of Co$^{3+}$ was 10%, and the content of Co$^{4+}$ was 90%.

Example 3-7

This example was conducted to describe the inventive sorbent and preparation thereof.

Raw materials: γ-Al$_2$O$_3$ carrier (specific surface area 180m$^2$/g), sphere, average particle diameter 1.3mm, a product from the Changling Catalyst Plant; Co(NO$_3$)$_2$, Zn(NO$_3$)$_2$, and Na$_2$CO$_3$ were commercially available from the Beijing Chemical Works.

Preparation method: the composition Na-Co-Zn-γ-Al$_2$O$_3$ was prepared by a step-wise impregnation process as disclosed in Example 3-1. A drying step at 110 °C was conducted for 12 hrs after each impregnation step, the resultant was baked at 950°C for 4 hrs.

Composition: calculated by Na$_2$CO$_3$, Co$_3$O$_4$, and ZnO respectively, the amount of Na in Na-Co-Zn-γ -Al$_2$O$_3$ was 18wt%, the amount of Co was 8wt%, and the amount of Zn was 10wt%.

As characterized by the X-ray photoelectron spectroscopy, in the composition, Co was present in at least the forms of Co$^{3+}$ and Co$^{4+}$ respectively. Calculated by the element and based on the total content of Co$^{3+}$ and Co$^{4+}$, the content of Co$^{3+}$ was 13%, and the content of Co$^{4+}$ was 87%.

Example 3-8

This example was conducted to describe the effects of the inventive sorbent in simultaneously removing the sulfur and nitrogen substances.

The sorbent used in the experiment was Mg-Co-γ -Al$_2$O$_3$ prepared in Example 3-1. The experiment was conducted on a fixed bed continuous flow reactor. The reactor had an inside diameter of 8 mm. The material for removing sulfur and nitrogen substances was used in an amount of 1 g. The adsorption temperature was 175°C. The volume flow rate of the feedstock gas was 300ml/min. The volume composition of the feedstock gas was: 0.3% SO$_2$; 0.1% NO; 4.5%O$_2$; and the balance being N$_2$. Before the feedstock gas was fed, the material bed layer for removing the sulfur and nitrogen substances was purged by N$_2$ in a volume flow rate of 300ml/min at 300°C for 1 hr and then cooled to the adsorption temperature. The adsorption experiment was stopped when the concentration of the adsorbed tail gas tended to be stable. A SO$_2$ and NO analysis instrument was connected to the exit of the reactor to monitor the changes of the amounts of SO$_2$ and NO in the flue gas. In the experiment, the SO$_2$ saturated adsorption capacity was 1.256 mmol/g, and the NO saturated adsorption capacity was 0.431 mmol/g.

Comparative Example 3-2

This example was conducted to describe the effects of the sorbent of Comparative Example 3-1 in simultaneously removing the sulfur and nitrogen substances.

The sorbent used in the experiment was Mg-Co-γ -Al$_2$O$_3$ prepared in Comparative Example 3-1. The experiment was conducted on a fixed bed continuous flow reactor. The reactor had an inside diameter of 8 mm. The material for removing the sulfur and nitrogen substances was used in an amount of 1 g. The adsorption temperature was 50°C. The volume flow rate of the feedstock gas was 300ml/min. The volume composition of the feedstock gas was: 0.3% SO$_2$; 0.1% NO; 4.5% O$_2$; and the balance being N$_2$. Before the feedstock gas was fed, the material bed layer for removing the sulfur and nitrogen substances was purged by N$_2$ in a volume flow rate of 300ml/min at 300°C for 1 hr and then cooled to the adsorption temperature. The adsorption experiment was stopped when the concentration of the adsorbed tail gas tended to be stable, and then N$_2$ was used to purge the residual mix gas in the tube wall for 10 mins. A SO$_2$ and NO analysis instrument was connected to the exit of the reactor to monitor the changes of the amounts of SO$_2$ and NO in the flue gas. In the experiment, the SO$_2$ saturated adsorption capacity was 1.207 mmol/g, and the NO saturated adsorption capacity was 0.303 mmol/g.

Example 3-9

This experiment was conducted to describe the property of the regenerated sorbent prepared according to Example 3-1 in removing the sulfur and nitrogen substances.

The sorbent to be regenerated was the adsorption-saturated sample in Example 3-8, represented by SORB3-1. The regeneration was conducted on an ex-situ regenerator which was a tube reactor having an inside diameter of 10 mm.

1g SORB3-1 to be regenerated was placed in the reactor device. The temperature in the reactor was increased to 350 °C in a temperature ramp rate of 10°C/min under the nitrogen purge in a space velocity of 10000/hr. After being stable for 30 mins, the nitrogen purge was stopped, and then at the regeneration temperature of 350 °C, the SORB3-1 to be regenerated was contacted with CO gas in a space velocity of 15000/hr for 2 hrs; the reactor was purged by nitrogen gas in a space velocity of 10000/hr for 30 mins, and then the SORB3-1 reduced in the previous step was contacted with oxygen gas in a space velocity of 15000/hr for 30mins; the reactor was purged by nitrogen gas in a space velocity of 10000/hr for 30 mins, and then the SORB3-1 oxidized in the previous step was contacted with methane gas in a space velocity of 15000/hr for 1hr; subsequently, nitrogen gas was fed in a space velocity of 10000/hr to purge the reactor until the temperature of the reactor was decreased to the ambient temperature. Accordingly, the regenerated sorbent composition SORB3-1-1 was obtained.

The SORB3-1-1 was evaluated according to the evaluation conditions of Example 3-8. The experimental results were: the $SO_2$ saturated adsorption capacity was 1.161 mmol/g (92.4% of the capacity of the fresh sorbent), and the NO saturated adsorption capacity was 0.402 mmol/g (93.3% of the capacity of the fresh sorbent).

Comparative Example 3-3

This experiment was conducted to describe the property of the regenerated sorbent prepared according to the comparative example.

The sorbent to be regenerated was the adsorption-saturated sample in Comparative Example 3-2, and the regeneration steps were same to those in Example 3-9.

The evaluation conditions for the regenerated sample were same to those in Comparative Example 3-2. The experimental results of the regenerated Comparative Example 3-1 sample were: the $SO_2$ saturated adsorption capacity was 0.761 mmol/g (63.0% of the capacity of the fresh sorbent), and the NO saturated adsorption capacity was 0.189 mmol/g (62.3% of the capacity of the fresh sorbent).

Comparative Example 4-1

This comparative example was conducted to describe the sorbent prepared at a baking temperature equal to or below 600°C.

Raw materials: silica carrier (specific surface area 162m²/g), sphere, average particle diameter 1.22mm, a product from the Changling Catalyst Plant; $Mg(NO_3)_2$, $Zn(NO_3)_2$, and $La(NO_3)_3$ were commercially available from the Beijing Chemical Works.

Preparation method: 109.6g $Zn(NO_3)_3$ was dissolved by deionized water to 1 liter solution L1, 172g $La(NO_3)_3$ was dissolved by deionized water to 1 liter solution L2, and 592g $Mg(NO_3)_2$ solution was dissolved by deionized water to 1 liter solution L3. 1000g $SiO_2$ carrier was sequentially impregnated with L1, L2, and L3 for 2 hrs, a drying step was conducted at 110°C for 12 hrs after each impregnation step, and the resultant mixture was baked at 600°C for 10 hrs to obtain the inventive composition La-Mg-Zn-$SiO_2$.

Composition: calculated by MgO, ZnO and $La_2O_3$ respectively, the amount of Mg was 16wt%, the amount of Zn was 3wt%, and the amount of La was 7wt%.

As characterized by the X-ray photoelectron spectroscopy, in the composition, Zn was present only in the form of $Zn^{2+}$.

Example 4-1

Raw materials: silica carrier (specific surface area 162m²/g), sphere, average particle diameter 1.22mm, a product from the Changling Catalyst Plant; $Mg(NO_3)_2$, $Zn(NO_3)_2$, and $La(NO_3)_3$ were commercially available from the Beijing Chemical Works.

Preparation method: 109.6g $Zn(NO_3)_2$ was dissolved by deionized water to 1 liter solution L1, 172g $La(NO_3)_3$ was dissolved by deionized water to 1 liter solution L2, and 592g $Mg(NO_3)_2$ solution was dissolved by deionized water to 1 liter solution L3. 1000g $SiO_2$ carrier was sequentially impregnated with L1, L2, and L3 for 2 hrs, a drying step was conducted at 110°C for 12 hrs after each impregnation step, and the resultant mixture was baked at 950°C for 10 hrs to obtain the inventive composition La-Mg-Zn-$SiO_2$.

Composition: calculated by MgO, ZnO and $La_2O_3$ respectively, the amount of Mg was 16wt%, the amount of Zn was 3wt%, and the amount of La was 7wt%.

As characterized by the X-ray photoelectron spectroscopy, in the composition, Zn was present in at least the forms of $Zn^{1+}$ and $Zn^{2+}$. Calculated by the element and based on the total content of $Zn^{1+}$ and $Zn^{2+}$, the content of $Zn^{1+}$ was 13%, and the content of $Zn^{2+}$ was 87%.

Example 4-2

Raw materials: $\gamma$-Al$_2$O$_3$ carrier (specific surface area 180m$^2$/g), sphere, average particle diameter 1.3mm, a product from the Changling Catalyst Plant; Zn(NO$_3$)$_2$ and K$_2$CO$_3$ were commercially available from the Beijing Chemical Works.

Preparation method: the composition K-Zn-$\gamma$-Al$_2$O$_3$ was prepared by a step-wise impregnation process, as disclosed in Example 4-1. A drying step at 110°C was conducted for 12 hrs after each impregnation step, and then the resultant composition was baked at 900°C for 8 hrs.

Composition: calculated by K$_2$CO$_3$ and ZnO respectively, the amount of K in K-Zn-$\gamma$-Al$_2$O$_3$ was 4wt%, and the amount of Zn was 17wt%.

As characterized by the X-ray photoelectron spectroscopy, in the composition, Zn was present in at least the forms of Zn$^{1+}$ and Zn$^{2+}$ Calculated by the element and based on the total content of Zn$^{1+}$ and Zn$^{2+}$, the content of Zn$^{1+}$ was 15%, and the content of Zn$^{2+}$ was 85%.

Example 4-3

Raw materials: $\gamma$-Al$_2$O$_3$ carrier (specific surface area 180m$^2$/g), sphere, average particle diameter 1.3mm, a product from the Changling Catalyst Plant; Mn(NO$_3$)$_2$(50wt% solution), Zn(NO$_3$)$_2$ and Na$_2$CO$_3$ were commercially available from the Beijing Chemical Works.

Preparation method: the composition Na-Mn-Zn-$\gamma$-Al$_2$O$_3$ was prepared by a step-wise impregnation process, as disclosed in Example 4-1. A drying step at 110 °C was conducted for 12 hrs after each impregnation step, and then the resultant was baked at 700°C for 6 hrs.

Composition: calculated by Na$_2$CO$_3$, MnO$_2$, and ZnO respectively, the amount of Na in Na-Mn-Zn-$\gamma$-Al$_2$O$_3$ was 16wt%, the amount of Mn was 8wt%, and the amount of Zn was 15wt%.

As characterized by the X-ray photoelectron spectroscopy, in the composition, Zn was present in at least the forms of Zn$^{1+}$ and Zn$^{2+}$. Calculated by the element and based on the total content of Zn$^{1+}$ and Zn$^{2+}$, the content of Zn$^{1+}$ was 17%, and the content of Zn$^{2+}$ was 83%.

Example 4-4

Raw materials: $\gamma$-Al$_2$O$_3$ carrier (specific surface area 180m$^2$/g), sphere, average particle diameter 1.3mm, a product from the Changling Catalyst Plant; Zn(NO$_3$)$_2$, Co(NO$_3$)$_2$, Na$_2$CO$_3$, and Ba(NO$_3$)$_2$ were commercially available from the Beijing Chemical Works.

Preparation method: the composition Na-Zn-Co-Ba-$\gamma$-Al$_2$O$_3$ was prepared by a step-wise impregnation process, as disclosed in Example 4-1. A drying step at 110°C was conducted for 12 hrs after each impregnation step, and then the resultant was baked at 680°C for 5 hrs.

Composition: calculated by Na$_2$CO$_3$, ZnO, Co$_3$O$_4$, and BaO respectively, the amount of Na in Na-Zn-Co-Ba-$\gamma$-Al$_2$O$_3$ was 3wt%, the amount of Zn was 12wt%, the amount of Co was 9wt%, and the amount of Ba was 8wt%.

As characterized by the X-ray photoelectron spectroscopy, in the composition, Zn was present in at least the forms of Zn$^{1+}$ and Zn$^{2+}$. Calculated by the element and based on the total content of Zn$^{1+}$ and Zn$^{2+}$, the content of Zn$^{1+}$ was 19%, and the content of Zn$^{2+}$ was 81 %.

Example 4-5

Raw materials: $\gamma$-Al$_2$O$_3$ carrier (specific surface area 180m$^2$/g), sphere, average particle diameter 1.3mm, a product from the Changling Catalyst Plant; Cr(NO$_3$)$_2$, Zn(NO$_3$)$_2$, and Na$_2$CO$_3$ were commercially available from the Beijing Chemical Works.

Preparation method: the composition Na-Zn-Cr-$\gamma$-Al$_2$O$_3$ was prepared by a step-wise impregnation process, as disclosed in Example 4-1. A drying step at 110 °C was conducted for 12 hrs after each impregnation step, and then the resultant composition was baked at 750°C for 4 hrs.

Composition: calculated by Na$_2$CO$_3$, Cr$_2$O$_3$, and ZnO respectively, the amount of Na in Na-Cr-Zn-$\gamma$-Al$_2$O$_3$ was 8wt%, the amount of Cr was 3wt%, and the amount of Zn was 15wt%.

As characterized by the X-ray photoelectron spectroscopy, in the composition, Zn was present in at least the forms of Zn$^{1+}$ and Zn$^{2+}$. Calculated by the element and based on the total content of Zn$^{1+}$ and Zn$^{2+}$ the content of Zn$^{1+}$ was 21%, and the content of Zn$^{2+}$ was 79%.

Example 4-6

Raw materials: $\gamma$ -Al$_2$O$_3$ carrier (specific surface area 180m$^2$/g), sphere, average particle diameter 1.3mm, a product from the Changling Catalyst Plant; Cu(NO$_3$)$_2$, Zn(NO$_2$)$_2$, and Na$_2$CO$_3$ were commercially available from the Beijing Chemical Works.

Preparation method: the composition Na- Cu -Zn-$\gamma$ -Al$_2$O$_3$ was prepared by a step-wise impregnation process, as disclosed in Example 4-1. A drying step at 110°C was conducted for 12 hrs after each impregnation step, and then the resultant composition was baked at 950°C for 6 hrs.

Composition: calculated by Na$_2$CO$_3$, CuO, and ZnO respectively, the amount of Na in Na-Cu-Zn-$\gamma$ -Al$_2$O$_3$ was 14wt%, the amount of Zn was 8wt%, and the amount of Zn was 12wt%.

As characterized by the X-ray photoelectron spectroscopy, in the composition, Zn was present in at least the forms of Zn$^{1+}$ and Zn$^{2+}$. Calculated by the element and based on the total content of Zn$^{1+}$ and Zn$^{2+}$, the content of Zn$^{1+}$ was 14%, and the content of Zn$^{2+}$ was 86%.

Example 4-7

This example was conducted to describe the effects of the inventive sorbent in simultaneously removing the sulfur and nitrogen substances.

The sorbent used in the experiment was La-Mg-Zn-SiO$_2$ prepared in Example 4-1. The experiment was conducted on a fixed bed continuous flow reactor. The reactor had an inside diameter of 8 mm. The material for removing sulfur and nitrogen substances was used in an amount of 1 g. The adsorption temperature was 175°C. The volume flow rate of the feedstock gas was 300ml/min. The volume composition of the feedstock gas was: 0.3% SO$_2$; 0.1% NO; 4.5% O$_2$; and the balance being N$_2$. Before the feedstock gas was fed, the material bed layer for removing the sulfur and nitrogen substances was purged by N$_2$ in a volume flow rate of 300ml/min at 300 °C for 1 hr and then cooled to the adsorption temperature. The adsorption experiment was stopped when the concentration of the adsorbed tail gas tended to be stable. A SO$_2$ and NO analysis instrument was connected to the exit of the reactor to monitor the changes of the amounts of SO$_2$ and NO in the flue gas, and the SO$_2$ and NO saturated adsorption capacities of the composition were calculated by the FIREFOX software. In the experiment, the SO$_2$ saturated adsorption capacity was 1.188 mmol/g, and the NO saturated adsorption capacity was 0.344 mmol/g.

Comparative Example 4-2

This example was conducted to describe the effects of the sorbent of Comparative Example in simultaneously removing the sulfur and nitrogen substances.

The sorbent used in the experiment was La-Mg-Zn-SiO$_2$ prepared in Comparative Example 4-1. The experiment was conducted on a fixed bed continuous flow reactor. The reactor had an inside diameter of 8 mm. The material for removing the sulfur and nitrogen substances was used in an amount of 1 g. The adsorption temperature was 50°C. The volume flow rate of the feedstock gas was 300ml/min. The volume composition of the feedstock gas was: 0.3% SO$_2$; 0.1% NO; 4.5% O$_2$; and the balance being N$_2$. Before the feedstock gas was fed, the material bed layer for removing the sulfur and nitrogen substances was purged by N$_2$ in a volume flow rate of 300ml/min at 300°C for 1 hr and then cooled to the adsorption temperature. The adsorption experiment was stopped when the concentration of the adsorbed tail gas tended to be stable, and then N$_2$ was used to purge the residual mix gas in the tube wall for 10 mins. A SO$_2$ and NO analysis instrument was connected to the exit of the reactor to monitor the changes of the amounts of SO$_2$ and NO in the flue gas. In the experiment, the SO$_2$ saturated adsorption capacity was 1.153 mmol/g, and the NO saturated adsorption capacity was 0.323 mmol/g.

Example 4 - 8

This example was conducted to describe the effects of the sorbent according to inventive Example 4-6 in simultaneously removing the sulfur and nitrogen substances.

The sorbent used in the experiment was Na- Cu -Zn-$\gamma$ -Al$_2$O$_3$ prepared in Example 4-6. The experiment was conducted on a fixed bed continuous flow reactor. The reactor had an inside diameter of 8 mm. The material for removing sulfur and nitrogen substances was used in an amount of 1 g. The adsorption temperature was 100°C. The volume flow rate of the feedstock gas was 300ml/min. The volume composition of the feedstock gas was: 0.3% SO$_2$; 0.1% NO; 4.5% O$_2$; and the balance being N$_2$. Before the feedstock gas was fed, the material bed layer for removing the sulfur and nitrogen substances was purged by N$_2$ in a volume flow rate of 300ml/min at 300 °C for 1 hr and then cooled to the adsorption temperature. The adsorption experiment was stopped when the concentration of the adsorbed tail gas tended to be stable, and then N$_2$ was used to purge the residual mix gas in the tube wall for 10 mins. A SO$_2$ and NO analysis

instrument was connected to the exit of the reactor to monitor the changes of the amounts of $SO_2$ and NO in the flue gas. In the experiment, the $SO_2$ saturated adsorption capacity was 1.180 mmol/g, and the NO saturated adsorption capacity was 0.340 mmol/g.

Example 4-9

This experiment was conducted to describe the property of the regenerated sorbent according to the invention.
The sorbent to be regenerated was the adsorption-saturated samples in Examples 4-8 and 4-7, represented by SORB4-1(the sorbent of Example 4-6) and SORB4-2 (the sorbent of Example 4-1). The regeneration was conducted on an ex-situ regenerator which was a tube reactor having an inside diameter of 10 mm.
1g SORB4-1 to be regenerated was placed in the reactor device. The temperature in the reactor was increased to 350 °C in a temperature ramp rate of 10°C/min under the nitrogen purge in a space velocity of 10000/hr. After being stable for 30 mins, the nitrogen purge was stopped, and then at the regeneration temperature of 350 °C, the SORB4-1 to be regenerated was contacted with CO gas in a space velocity of 15000/hr for 2 hrs; the reactor was purged by nitrogen gas in a space velocity of 10000/hr for 30 mins, and then the SORB4-1 reduced in the previous step was contacted with oxygen gas in a space velocity of 15000/hr for 30mins; the reactor was purged by nitrogen gas in a space velocity of 10000/hr for 30 mins, and then the SORB4-1 oxidized in the previous step was contacted with methane gas in a space velocity of 15000/hr for 1hr; subsequently, nitrogen gas was fed in a space velocity of 10000/hr to purge the reactor until the temperature of the reactor was decreased to the ambient temperature. Accordingly, the regenerated sorbent composition SORB4-1-1 was obtained.
The SORB4-1-1 was evaluated according to the evaluation conditions of Example 4-8. The experimental result was: the $SO_2$ saturated adsorption capacity was 1.100 mmol/g (93.2% of the capacity of the fresh sorbent), and the NO saturated adsorption capacity was 0.297 mmol/g (87.3% of the capacity of the fresh sorbent).
SORB4-2 was tested similarly, except that the regeneration temperature was 500°C, and the times for contacting with the reductive or oxidative gas in regeneration steps (1), (2) and (3) were 3hrs, 1.5hrs and 1hr respectively. The test results were: the $SO_2$ saturated adsorption capacity was 1.045 mmol/g (87.9% of the capacity of the fresh sorbent), and the NO saturated adsorption capacity was 0.276 mmol/g (80.2% of the capacity of the fresh sorbent).

Comparative Example 4-3

This experiment was conducted to describe the property of the regenerated sorbent prepared according to the comparative example.
The sorbent to be regenerated was the adsorption-saturated sample in Comparative Example 4-2, and the regeneration steps were same to those for SORB4-1 in Example 4-9.
The evaluation conditions for the regenerated sample were same to those in Comparative Example 4-2. The experimental results of the regenerated Comparative Example 4-1 sample were: the $SO_2$ saturated adsorption capacity was 0.692 mmol/g (60.0% of the capacity of the fresh sorbent), and the NO saturated adsorption capacity was 0.164 mmol/g (50.8% of the capacity of the fresh sorbent).
Above experimental results were summarized in the following Table 1.

Table 1

| Example No. | Composition of the sorbent | | | | Baking temperature (°C) | Absorption properties | | | |
|---|---|---|---|---|---|---|---|---|---|
| | Metal component I | Metal component II | Carrier | Other component | | $SO_2$ SAP (mmol/g) | NO SAP (mmol/g) | regenerated $SO_2$ SAP/fresh $SO_2$ SAP | regenerated NO SAP/fresh NO SAP |
| Comparative Example 1-1 | Mg | Cr | SiO2 | La | 600 | 1.201 | 0.310 | 63.3% | 58.6% |
| Comparative Example 2-1 | Ba | Mn | $\gamma$-$Al_2O_3$ | La | 600 | 1.209 | 0.308 | 66.3% | 72.7% |
| Comparative Example 2-2 | Na | Cu | $\gamma$-$Al_2O_3$ | La | 800 | 1.130 | 0.297 | 69.1% | 72.4% |
| Comparative Example 2-3 | Na | Mn | kaolin | La | 800 | 1.121 | 0.278 | 72.3% | 72.7% |
| Comparative Example 3-1 | Mg | Co | $\gamma$-$Al_2O_3$ | - | 600 | 1.207 | 0.303 | 63.0% | 62.3% |
| Comparative Example 4-1 | Mg | Zn | $SiO_2$ | La | 600 | 1.153 | 0.323 | 60.0% | 50.8% |
| Example 1-1 | Mg | Cr | SiO2 | La | 700 | 1.284 | 0.389 | 84.1% | 97.1% |
| Example 1-2 | K | Cr | $\gamma$ -$Al_2O_3$ | - | 900 | | | | |
| Example 1-3 | Na | Cr+Mn | $\gamma$ -$Al_2O_3$ | - | 800 | 1.337 | 0.446 | 89.8% | 92.3% |
| Example 1-4 | Na+Ba | Cr+Co | $\gamma$ -$Al_2O_3$ | - | 680 | | | | |
| Example 1-5 | Na | Cr | $\gamma$ -$Al_2O_3$ | Cu | 750 | | | | |
| Example 1-6 | Na | Cr+Zn | $\gamma$ -$Al_2O_3$ | - | 950 | | | | |
| Example 2-1 | Ba | Mn | $\gamma$ -$Al_2O_3$ | La | 900 | 1.320 | 0.446 | 87.3% | 88.8% |
| Example 2-2-1 | Na | Mn | $\gamma$ -$Al_2O_3$ | La | 800 | 1.315 | 0.440 | 91.6% | 90.9% |
| Example 2-2-2 | Na | Mn | SiO2 | La | 800 | 1.270 | 0.412 | | |
| Example 2-2-3 | Na | Mn | SiO2 | La | 800 | 1.286 | 0.420 | | |
| Example 2-2-4 | Na | Mn | $\gamma$ -$Al_2O_3$ | La | 800 | 1.308 | 0.429 | | |

(continued)

| Example No. | Composition of the sorbent | | | | Baking temperature (°C) | Absorption properties | | | |
|---|---|---|---|---|---|---|---|---|---|
| | Metal component I | Metal component II | Carrier | Other component | | SO$_2$ SAP (mmol/g) | NO SAP (mmol/g) | regenerated SO$_2$ SAP/fresh SO$_2$ SAP | regenerated NO SAP/fresh NO SAP |
| Example 2-3 | K | Mn | $\gamma$-Al$_2$O$_3$ | - | 750 | 1.319 | 0.434 | | |
| Example 2-4 | Na + Ba | Mn + Co | $\gamma$-Al$_2$O$_3$ | - | 680 | | | | |
| Example 2-5 | Na | Mn | $\gamma$-Al$_2$O$_3$ | Cu | 750 | | | | |
| Example 2-6 | Na | Mn + Zn | $\gamma$-Al$_2$O$_3$ | - | 950 | | | | |
| Example 3-1 | Mg | Co | $\gamma$ -Al$_2$O$_3$ | - | 900 | 1.256 | 0.431 | 92.4% | 93.3% |
| Example 3-2 | K | Co | SiO$_2$ | - | 750 | | | | |
| Example 3-3 | Ba | Co | $\gamma$-Al$_2$O$_3$ | La | 650 | | | | |
| Example 3-4 | K + Ca | Co + Cr | $\gamma$-Al$_2$O$_3$ | - | 900 | | | | |
| Example 3-5 | Na | Co + Mn | $\gamma$-Al$_2$O$_3$ | - | 700 | | | | |
| Example 3-6 | Na | Co | $\gamma$-Al$_2$O$_3$ | Cu | 750 | | | | |
| Example 3-7 | Na | Co + Zn | $\gamma$-Al$_2$O$_3$ | - | 950 | | | | |
| Example 4-1 | Mg | Zn | SiO$_2$ | La | 950 | 1.188 | 0.344 | 87.9% | 80.2% |
| Example 4-2 | K | Zn | $\gamma$-Al$_2$O$_3$ | - | 900 | | | | |
| Example 4-3 | Na | Zn + Mn | $\gamma$-Al$_2$O$_3$ | - | 700 | | | | |
| Example 4-4 | Na + Ba | Zn + Co | $\gamma$-Al$_2$O$_3$ | - | 680 | | | | |
| Example 4-5 | Na | Zn + Cr | $\gamma$-Al$_2$O$_3$ | - | 750 | | | | |
| Example 4-6 | Na | Zn | $\gamma$-Al$_2$O$_3$ | Cu | 950 | 1.180 | 0.340 | 93.2% | 87.3% |
| * SAP: saturated adsorption capacity | | | | | | | | | |

Above results have shown that, compared with the prior art, the present invention provides a significantly better effects in removing the sulfur and nitrogen substances simultaneously. Moreover, the reneneration stability of the sorbent composition used in the inventive process is clearly better than that of the prior art sorbent.

## Claims

1. A sorbent composition for removing SOx and/or NOx from the flue gas, comprising a refractory inorganic oxide matrix, metal component I and metal component II impregnated on the matrix, wherein
said refractory inorganic oxide matrix has a specific surface area of more than 130 $m^2$/g and is selected from alumina, silica, titania, magnesium oxide, silica-alumina, silica-magnesium oxide, silica-zirconia, silica-thoria, silica-beryllia, silica-titania, silica-zirconia, titania-zirconia, silica-aluminia-thoria, silica-alumina-titania, silica-alumina-magnesium oxide, and silica-alumina-zirconia,
said metal component I is selected from one or more element(s) of group IA and group IIA in the Periodic Table of Elements,
said metal component II is selected from a transition metal of group IIB, group VIB, group VIIB, and group VIII in the Periodic Table of Elements, and
wherein said metal component II is present in at least two different valence-states, as **characterized by** X-ray photoelectron spectroscopy.

2. The sorbent composition according to Claim 1, **characterized in that** said metal component II is selected from one or more metal(s) of Zn of group IIB, Cr of group VIB, Mn of group VIIB, or Co of group VIII, and preferably comprises or consists of Mn of group VIIB.

3. The sorbent composition according to Claim 1 or 2, **characterized in that** the refractory inorganic oxide matrix has at least one of the following features (i) and (ii):

    (i) the specific surface area thereof is more than 150 $m^2$/g;
    (ii) it is selected from one or more of alumina, silica, and silica-alumina, and is preferably $\gamma$ - $Al_2O_3$.

4. The sorbent composition according to any one of Claims 1 to 3, **characterized in that** said metal component I is selected from Na and K of group IA, Ba, Mg, and Ca of group IIA, and mixtures thereof, and is preferably selected from Na and K of group IA, and mixtures thereof.

5. The sorbent composition according to any one of Claims 1 to 4, **characterized in that** said sorbent composition consists of said metal component I, said metal component II and said refractory inorganic oxide matrix, wherein said components I and II can be present in one or more form(s) selected from the oxides and/or salts with other components.

6. The sorbent composition according to any one of Claims 1 to 5, **characterized in that** the sorbent composition comprises, based on said composition,
the refractory inorganic oxide matrix in an amount of 50-99 wt%, the metal component I in an amount of 0.5-35 wt%, and the metal component II in an amount of 0.5-35 wt%; and preferably
the refractory inorganic oxide matrix in an amount of 65-98 wt%, the metal component I in an amount of 1-20 wt%, and the metal component II in an amount of 1-18 wt%,
wherein the amounts of the metal components I and II are calculated by their oxides.

7. The sorbent composition according to any one of Claims 1 to 6, **characterized in that** said metal component II satisfies one of the following features (i) to (iv):

    (i) it comprises Cr which is present in the valence-states of $Cr^{6+}$ and $Cr^{3+}$; calculated by the element and based on the total content of Cr, the content of $Cr^{3+}$ is 90-70%, and the content of $Cr^{6+}$ is 10%-30%;
    (ii) it comprises Mn which is present in the valence-states of $Mn^{4+}$ and $Mn^{2+}$; calculated by the element and based on the total content of Mn, the content of $Mn^{2+}$ is 10-30%, and the content of $Mn^{4+}$ is 90-70%;
    (iii) it comprises Co which is present in the valence-states of $Co^{3+}$ and $Co^{4+}$; calculated by the element and based on the total content of Co, the content of $Co^{3+}$ is 10-30%, and the content of $Co^{4+}$ is 90-70%; or
    (iv) it comprises Zn which is present in the valence-states of $Zn^{1+}$ and $Zn^{2+}$; calculated by the element and based on the total content of Zn, the content of $Zn^{1+}$ is 10-28%,and the content of $Zn^{2+}$ is 90-72%.

8. A method for preparing the sorbent composition according to any one of Claims 1 to 7, comprising the following steps:

(1) impregnating the refractory inorganic oxide matrix and/or the precursor thereof by the solution of the compound containing a metal component I and the solution of the compound containing a metal component II, wherein the refractory inorganic oxide matrix has a specific surface of more than 130 m$^2$/g and is selected from alumina, silica, titania, magnesium oxide, silica-alumina, silica-magnesium oxide, silica-zirconia, silica-thoria, silica-beryllia, silica-titania, silica-zirconia, titania-zirconia, silica-alumina-thoria, silica-alumina-titania, silica-alumina-magnesium oxide, and silica-alumina-zirconia,
wherein said metal component I is selected from one or more element(s) of group IA and group IIA in the Periodic Table of Elements, and said metal component II is selected from one or more transition metal(s) of group IIB, group VIB, group VIIB, and group VIII in the Periodic Table of Elements; and
(2) baking the product obtained from above step (1) at a temperature of more than 600°C to 1100°C for 2 to 12 hrs, to obtain said composition.

9. The method according to Claim 8, **characterized in that** the baking temperature in said step (2) is 620°C-1000°C, preferably 650°C-960°C, and more preferably 700°C-800°C.

10. A process for removing the nitrogen oxides and sulfur oxides in the flue gas, comprising, under the conditions for the adsorptive separation, contacting the flue gas containing nitrogen oxides and sulfur oxides with the sorbent composition according to any one of Claims 1 to 7, wherein the conditions for the adsorptive separation comprise a temperature of 0-300°C, a volume space velocity of the feedstock gases of 5000/hr-50000/hr, and a pressure of 0,1-3 MPa.

11. The process according to Claim 10, **characterized in that** the conditions for the adsorptive separation comprise:

a temperature of 0-100°C, a volume space velocity of the feedstock gases of 5000/hr-35000/hr, and a pressure of 0.1-2 MPa.

12. The process according to Claim 10 or 11, **characterized in that** said process further includes a regeneration step for said sorbent:

(1) contacting the composition to be regenerated with a reductive gas at 200°C-800°C for 0.5-5 hrs;
(2) contacting the product obtained in above step (1) with an oxygen-containing gas at 200°C-800°C for 0.5-3 hrs; and
(3) again contacting the product obtained in step (2) with a reductive gas at 200°C-800°C for 0.5-5 hrs, wherein the reductive gas is same or different to that in above step (1).

13. The process according to Claim 12, **characterized in that** the temperature in said step (1) is 280°C-650°C, the temperature in said step (2) is 280°C-650°C, and the temperature in said step (3) is 280°C-650°C.

14. The process according to Claim 12 or 13, **characterized in that** the contacting time in said step (1) is 0.5 hr - 3.5 hrs, the contacting time in said step (2) is 0.5 hr - 2.5 hrs, and the contacting time in said step (3) is 0.5 hr - 3.5 hrs.

**Patentansprüche**

1. Sorptionszusammensetzung zur Entfernung von SOx und/oder NOx von einem Abgas, umfassend eine feuerfeste anorganische Oxidmatrix, Metallkomponente I und Metallkomponente II, die auf der Matrix imprägniert sind, worin die feuerfeste anorganische Oxidmatrix eine spezifische Oberfläche von mehr als 130 m$^2$/g hat und ausgewählt ist aus Aluminiumoxid, Siliziumoxid, Titandioxid, Magnesiumoxid, Siliziumoxid-Aluminiumoxid, Siliziumoxid-Magnesiumoxid, Siliziumoxid-Zirkoniumoxid, Siliziumoxid-Thoriumoxid, Siliziumoxid-Berylliumoxid, Siliziumoxid-Titandioxid, Siliziumoxid-Zirkoniumoxid, Titandioxid-Zirkoniumoxid, Siliziumoxid-Aluminiumoxid-Thoriumoxid, Siliziumoxid-Aluminiumoxid-Titandioxid, Siliziumoxid-Aluminiumoxid-Magnesiumoxid und Siliziumoxid-Aluminiumoxid-Zirkoniumoxid,
worin die Metallkomponente I ausgewählt ist aus einem oder mehreren Elementen der Gruppen IA und IIA im Periodensystem der Elemente,
worin die Metallkomponente II ausgewählt ist aus einem Übergangsmetall der Gruppen IIB, VIB, VIIB und VIIIB im Periodensystem der Elemente und

worin die Metallkomponente II in zumindest zwei unterschiedlichen Valenzzuständen vorhanden ist, charakterisiert durch Röntgenbeugung-Photoelektronenspektroskopie.

2. Sorptionszusammensetzung nach Anspruch 1, **dadurch gekennzeichnet, dass** die Metallkomponente II ausgewählt ist aus einem oder mehreren Metallen von Zn der Gruppe IIB, Cr der Gruppe VIB, Mn der Gruppe VIIB oder Co der Gruppe VIII und bevorzugt Mn der Gruppe VIIB enthält oder daraus besteht.

3. Sorptionszusammensetzung nach Anspruch 1 oder 2, **dadurch gekennzeichnet, dass** die feuerfeste anorganische Oxidmatrix zumindest eines der folgenden Merkmale (i) und (ii) aufweist:

   (i) die spezifische Oberfläche davon ist mehr als 150 m$^2$/g,
   (ii) sie ist ausgewählt aus einem oder mehreren von Aluminiumoxid, Siliziumoxid und Siliziumoxid-Aluminiumoxid, und ist bevorzugt $\gamma$ - Al$_2$O$_3$.

4. Sorptionszusammensetzung nach einem der Ansprüche 1 bis 3, **dadurch gekennzeichnet, dass** die Metallkomponente I ausgewählt ist aus Na und K der Gruppe IA, Ba, Mg und Ca der Gruppe IIA und Mischungen davon und bevorzugt ausgewählt ist aus Na und K der Gruppe IA und Mischungen davon.

5. Sorptionszusammensetzung nach einem der Ansprüche 1 bis 4, **dadurch gekennzeichnet, dass** die Sorptionszusammensetzung aus der Metallkomponente I, der Metallkomponente II und der feuerfesten anorganischen Oxidmatrix besteht, worin die Komponenten I und II in einer oder mehreren Formen vorhanden sein können, ausgewählt aus den Oxiden und/oder Salzen mit anderen Komponenten.

6. Sorptionszusammensetzung nach einem der Ansprüche 1 bis 5, **dadurch gekennzeichnet, dass** die Sorptionszusammensetzung auf der Basis der Zusammensetzung umfasst:

   die feuerfeste anorganische Oxidmatrix in einer Menge von 50-99 Gew.-%, die Metallkomponente I in einer Menge von 0,5-35 Gew.-% und die Metallkomponente II in einer Menge von 0,5-35 Gew.-%; und bevorzugt die feuerfeste anorganische Oxidmatrix in einer Menge von 65-98 Gew.-%, die Metallkomponente I in einer Menge von 1-20 Gew.-% und die Metallkomponente II in einer Menge von 1-18 Gew.-%, worin die Mengen der Metallkomponenten I und II durch ihre Oxide berechnet sind.

7. Sorptionszusammensetzung nach einem der Ansprüche 1 bis 6, **dadurch gekennzeichnet, dass** die Metallkomponente II eines der folgenden Merkmale (i) bis (iv) erfüllt:

   (i) sie umfasst Cr, das in den Valenzzuständen von Cr$^{6+}$ und Cr$^{3+}$ vorhanden ist; berechnet durch das Element, und basierend auf dem Gesamtgehalt von Cr ist der Gehalt von Cr$^{3+}$ 90-70% und der Gehalt von Cr$^{6+}$ ist 10-30%;
   (ii) sie umfasst Mn, das in den Valenzzuständen von Mn$^{4+}$ und Mn$^{2+}$ vorhanden ist; berechnet durch das Element, und basierend auf dem Gesamtgehalt von Mn ist der Gehalt von Mn$^{2+}$ 10-30% und der Gehalt von Mn$^{4+}$ ist 90-70%;
   (iii) sie umfasst Co, das in den Valenzzuständen von Co$^{3+}$ und Co$^{4+}$ vorhanden ist; berechnet durch das Element, und basierend auf dem Gesamtgehalt von Co ist der Gehalt von Co$^{3+}$ 10-30% und der Gehalt von Co$^{4+}$ ist 90-70%;
   (iv) sie umfasst Zn, das in den Valenzzuständen von Zn$^{6+}$ und Zn$^{2+}$ vorhanden ist; berechnet durch das Element, und basierend auf dem Gesamtgehalt von Zn ist der Gehalt von Zn$^{1+}$ 10-28% und der Gehalt von Zn$^{2+}$ ist 90-72%.

8. Verfahren zur Herstellung der Sorptionszusammensetzung nach einem der Ansprüche 1 bis 7, umfassend die folgenden Schritte:

   (1) Imprägnieren der feuerfesten anorganischen Oxidmatrix und/oder des Vorläufers davon durch die Lösung der Verbindung, umfassend eine Metallkomponente I, und die Lösung der Verbindung, umfassend eine Metallkomponente II, worin die feuerfeste anorganische Oxidmatrix eine spezifische Oberfläche von mehr als 130 m$^2$/g hat und ausgewählt ist aus Aluminiumoxid, Siliziumoxid, Titandioxid, Magnesiumoxid, Siliziumoxid-Aluminiumoxid, Siliziumoxid-Magnesiumoxid, Siliziumoxid-Zirkoniumoxid, Siliziumoxid-Thoriumoxid, Siliziumoxid-Berylliumoxid, Siliziumoxid-Titandioxid, Siliziumoxid-Zirkoniumoxid, Titandioxid-Zirkoniumoxid, Siliziumoxid-Aluminiumoxid-Thoriumoxid, Siliziumoxid-Aluminiumoxid-Titandioxid, Siliziumoxid-Aluminiumoxid-Magnesiumoxid und Siliziumoxid-Aluminiumoxid-Zirkoniumoxid, worin die Metallkomponente I ausgewählt ist aus einem oder mehreren Elementen der Gruppen IA und IIA des Periodensystems der Elemente und die Metallkomponente II ausgewählt ist aus einem oder mehreren Übergangsmetallen der Gruppen IIB, VIB, VIIB und VIII im Periodensystem der Elemente, und
(2) Backen des Produktes, erhalten vom obigen Schritt (1), bei einer Temperatur von mehr als 600-1100°C für 2-12 Stunden, unter Erhalt der Zusammensetzung.

9.  Verfahren nach Anspruch 8, **dadurch gekennzeichnet, dass** die Backtemperatur im Schritt (2) 620-1000°C, bevorzugt 650-960°C und mehr bevorzugt 700-800°C ist.

10. Verfahren zur Entfernung der Stickoxide und Schwefeloxide im Abgas, umfassend unter den Bedingungen für die adsorptive Trennung das Kontaktieren des Abgases, umfassend Stickoxide und Schwefeloxide, mit der Sorptionszusammensetzung nach einem der Ansprüche 1 bis 7, worin die Bedingungen für die adsorptive Trennung eine Temperatur von 0-300°C, eine Volumenraumgeschwindigkeit der Zuführgase von 5000-50000/h und einen Druck von 0,1-3 MPa umfassen.

11. Verfahren nach Anspruch 10, **dadurch gekennzeichnet, dass** die Bedingungen für die adsorptive Trennung umfassen:

    einen Temperatur von 0-100°C, einen Volumenraumgeschwindigkeit der Zuführgase von 5000-35000/h und einen Druck von 0,1-2 MPa.

12. Verfahren nach Anspruch 10 oder 11, **dadurch gekennzeichnet, dass** das Verfahren weiterhin einen Regenerationsschritt für das Sorbens umfasst:

    (1) Kontaktieren der zu regenerierenden Zusammensetzung mit einem reduzierenden Gas bei 200-800°C für 0,5-5 Stunden,
    (2) Kontaktieren des Produktes, erhalten im obigen Schritt (1), mit einem sauerstoffhaltigen Gas bei 200-800°C für 0,5-3 Stunden, und
    (3) erneutes Kontaktieren des von Schritt (2) erhaltenen Produktes mit einem reduktiven Gas bei 200-800°C für 0,5-5 Stunden, worin das reduktive Gas gleich oder verschieden ist zu dem gemäß dem obigen Schritt (1).

13. Verfahren nach Anspruch 12, **dadurch gekennzeichnet, dass** die Temperatur im Schritt (1) 280-650°C ist, die Temperatur im Schritt (2) 280-650°C ist und die Temperatur im Schritt (3) 280-650°C ist.

14. Verfahren nach Anspruch 12 oder 13, **dadurch gekennzeichnet, dass** die Kontaktzeit im Schritt (1) 0,5-3,5 Stunden, die Kontaktzeit im Schritt (2) 0,5-2,5 Stunden und die Kontaktzeit im Schritt (3) 0,5-3,5 Stunden ist.

## Revendications

1.  Composition de sorbant permettant d'éliminer les SOx et/ou les NOx du gaz de combustion, comprenant une matrice d'oxyde inorganique réfractaire, un composant métallique I et un composant métallique II imprégnés sur la matrice, dans laquelle
    ladite matrice d'oxyde inorganique réfractaire a une surface spécifique supérieure à 130 m$^2$/g et est choisie parmi l'alumine, la silice, l'oxyde de titane, l'oxyde de magnésium, la silice-alumine, la silice-oxyde de magnésium, la silice-zircone, la silice-oxyde de thorium, la silice-oxyde de béryllium, la silice-oxyde de titane, la silice-zircone, l'oxyde de titane-zircone, la silice-alumine-oxyde de thorium, la silice-alumine-oxyde de titane, la silice-alumine-oxyde de magnésium, et la silice-alumine-zircone,
    ledit composant métallique I est choisi parmi un ou plusieurs éléments(s) du groupe IA et du groupe IIA dans le Tableau Périodique des Éléments,
    ledit composant métallique II est choisi parmi un métal de transition du groupe IIB, du groupe VIB, du groupe VIIB et du groupe VIII dans le Tableau Périodique des Éléments, et
    dans laquelle ledit composant métallique II est présent dans au moins deux états de valence différents, tel que **caractérisé par** spectroscopie de photoélectrons X.

2.  Composition de sorbant selon la revendication 1, **caractérisée en ce que** ledit composant métallique II est choisi parmi un métal ou plusieurs métaux parmi le Zn du groupe IIB, le Cr du groupe VIB, le Mn du groupe VIIB, ou le Co du groupe VIII, et comprend ou est constitué de préférence de Mn du groupe VIIB.

3. Composition de sorbant selon la revendication 1 ou 2, **caractérisée en ce que** la matrice d'oxyde inorganique réfractaire a au moins l'une des caractéristiques suivantes (i) et (ii) :

   (i) sa surface spécifique est supérieure à 150 m$^2$/g ;
   (ii) elle est choisie parmi un ou plusieurs élément(s) parmi l'alumine, la silice, et la silice-alumine, et est de préférence $\gamma$ - Al$_2$O$_3$.

4. Composition de sorbant selon l'une quelconque des revendications 1 à 3, **caractérisée en ce que** ledit composant métallique I est choisi parmi Na et K du groupe IA, Ba, Mg, et Ca du groupe IIA, et leurs mélanges, et est de préférence choisi parmi Na et K du groupe IA, et leurs mélanges.

5. Composition de sorbant selon l'une quelconque des revendications 1 à 4, **caractérisée en ce que** ladite composition de sorbant est constituée dudit composant métallique I, dudit composant métallique II et de ladite matrice d'oxyde inorganique réfractaire, où lesdits composants I et II peuvent être présents sous une ou plusieurs forme(s) choisie (s) parmi des oxydes et/ou des sels avec d'autres composants.

6. Composition de sorbant selon l'une quelconque des revendications 1 à 5, **caractérisée en ce que** la composition de sorbant comprend, sur la base de ladite composition,
   la matrice d'oxyde inorganique réfractaire en une quantité allant de 50 à 99% en poids, le composant métallique I en une quantité allant de 0,5 à 35% en poids, et le composant métallique II en une quantité allant de 0,5 à 35% en poids ; et de préférence
   la matrice d'oxyde inorganique réfractaire en une quantité allant de 65 à 98% en poids, le composant métallique I en une quantité allant de 1 à 20% en poids, et le composant métallique II en une quantité allant de 1 à 18% en poids, où les quantités des composants métalliques I et II sont calculées par leurs oxydes.

7. Composition de sorbant selon l'une quelconque des revendications 1 à 6, **caractérisée en ce que** ledit composant métallique II satisfait l'une des caractéristiques suivantes (i) à (iv) :

   (i) il comprend du Cr qui est présent dans les états de valence de Cr$^{6+}$ et Cr$^{3+}$ ; la teneur en Cr$^{3+}$ est de 90 à 70%, et la teneur en Cr$^{6+}$ est de 10% à 30%, calculées par l'élément et sur la base de la teneur totale en Cr ;
   (ii) il comprend du Mn qui est présent dans les états de valence de Mn$^{4+}$ et Mn$^{2+}$ ; la teneur en Mn$^{2+}$ est de 10 à 30%, et la teneur en Mn$^{4+}$ est de 90 à 70%, calculées par l'élément et sur la base de la teneur totale en Mn ;
   (iii) il comprend du Co qui est présent dans les états de valence de Co$^{3+}$ et Co$^{4+}$ ; la teneur en Co$^{3+}$ est de 10 à 30%, et la teneur en Co$^{4+}$ est de 90 à 70%, calculées par l'élément et sur la base de la teneur totale en Co ; ou
   (iv) il comprend du Zn qui est présent dans les états de valence de Zn$^{1+}$ et Zn$^{2+}$ ; la teneur en Zn$^{1+}$ est de 10 à 28%, et la teneur en Zn$^{2+}$ est de 90 à 72%, calculées par l'élément et sur la base de la teneur totale en Zn.

8. Procédé de préparation de la composition de sorbant selon l'une quelconque des revendications 1 à 7, comprenant les étapes suivantes qui consistent :

   (1) à imprégner la matrice d'oxyde inorganique réfractaire et/ou son précurseur par la solution du composé contenant un composant métallique I et la solution du composé contenant un composant métallique II, où la matrice d'oxyde inorganique réfractaire a une surface spécifique supérieure à 130 m$^2$/g et est choisie parmi l'alumine, la silice, l'oxyde de titane, l'oxyde de magnésium, la silice-alumine, la silice-oxyde de magnésium, la silice-zircone, la silice-oxyde de thorium, la silice-oxyde de béryllium, la silice-oxyde de titane, la silice-zircone, l'oxyde de titane-zircone, la silice-alumine-oxyde de thorium, la silice-alumine-oxyde de titane, la silice-alumine-oxyde de magnésium, et la silice-alumine-zircone,
   où ledit composant métallique I est choisi parmi un ou plusieurs élément(s) du groupe IA et du groupe IIA dans le Tableau Périodique des Éléments, et ledit composant métallique II est choisi parmi un métal ou plusieurs métaux de transition du groupe IIB, du groupe VIB, du groupe VIIB et du groupe VIII dans le Tableau Périodique des Éléments ; et
   (2) à cuire le produit obtenu de l'étape (1) ci-dessus à une température supérieure à 600°C et allant jusqu'à 1100°C pendant 2 à 12 heures, pour obtenir ladite composition.

9. Procédé selon la revendication 8, **caractérisé en ce que** la température de cuisson dans ladite étape (2) est de 620°C à 1000°C, de préférence de 650°C à 960°C, et plus préférablement de 700°C à 800°C.

10. Processus permettant d'éliminer les oxydes d'azote et les oxydes de soufre dans le gaz de combustion, comprenant, dans les conditions de la séparation par adsorption, la mise en contact du gaz de combustion contenant des oxydes d'azote et des oxydes de soufre avec la composition de sorbant selon l'une quelconque des revendications 1 à 7, où les conditions de la séparation par adsorption comprennent une température comprise entre 0 et 300°C, une vitesse spatiale volumique des gaz d'alimentation comprise entre 5000/h et 50000/h, et une pression comprise entre 0,1 et 3 MPa.

11. Processus selon la revendication 10, **caractérisé en ce que** les conditions de la séparation par adsorption comprennent :

une température comprise entre 0 et 100°C, une vitesse spatiale volumique des gaz d'alimentation comprise entre 5000/h et 35000/h, et une pression comprise entre 0,1 et 2 MPa.

12. Processus selon la revendication 10 ou 11, **caractérisé en ce que** ledit processus comporte en outre une étape de régénération dudit sorbant qui consiste :

(1) à mettre en contact la composition devant être régénérée avec un gaz réducteur à une température comprise entre 200°C et 800°C pendant 0,5 à 5 heures ;
(2) à mettre en contact le produit obtenu dans l'étape (1) ci-dessus avec un gaz contenant de l'oxygène à une température comprise entre 200°C et 800°C pendant 0, 5 à 3 heures ; et
(3) à mettre en contact de nouveau le produit obtenu dans l'étape (2) avec un gaz réducteur à une température comprise entre 200°C et 800°C pendant 0,5 à 5 heures, où le gaz réducteur est identique à celui dans l'étape (1) ci-dessus ou en est différent.

13. Processus selon la revendication 12, **caractérisé en ce que** la température dans ladite étape (1) est comprise entre 280°C et 650°C, la température dans ladite étape (2) est comprise entre 280°C et 650°C, et la température dans ladite étape (3) est comprise entre 280°C et 650°C.

14. Processus selon la revendication 12 ou 13, **caractérisé en ce que** le temps de contact dans ladite étape (1) est de 0,5 h à 3,5 h, le temps de contact dans ladite étape (2) est de 0,5 h à 2,5 h, et le temps de contact dans ladite étape (3) est de 0,5 h à 3,5 h.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6521559 B
- US 5451387 A
- US 6165934 A

**Non-patent literature cited in the description**

- Investigation of Novel Sorbent/Catalyst La-Cu-Na-$\gamma$-Al2O3 for SO2 and NO Simultaneous Removal from Flue Gases. *Journal of Chemical Engineering of Chinese Universities,* February 2007, vol. 21 (1), 64-69
- **PALOMARES.** *Appl. Catal. B: Environmental,* 1999, vol. 20, 257-266
- **3.F. MOULDER.** Handbook of X ray Photoelectron Spectroscopy. Perkin-Elmer Corporation, 1992